# EUROPEAN PATENT APPLICATION

(11) **EP 4 472 259 A1**
(43) Date of publication of application: **04.12.2024**
(21) Application number: 23758972.6
(22) Date of filing: 02.02.2023
(51) Int. Cl.: H04W 12/106

(54) **INTEGRITY PROTECTION METHOD AND APPARATUS FOR DATA PACKET, AND STORAGE MEDIUM**

(30) Priority: 25.02.2022 CN 202210182295
(71) Applicant: Huawei Technologies Co., Ltd., Shenzhen, Guangdong 518129 (CN)
(72) Inventor: YOU, Chunhua, Shenzhen, Guangdong 518129 (CN); LOU, Chong, Shenzhen, Guangdong 518129 (CN); LIU, Nannan, Shenzhen, Guangdong 518129 (CN); ZHAO, Yang, Shenzhen, Guangdong 518129 (CN)
(74) Representative: Körber, Martin Hans
(86) International application number: PCT/CN2023/074183
(87) International publication number: WO 2023/160347

(57) **Abstract**

This application provides a data packet integrity protection method and apparatus, and a storage medium. A first network device configures a terminal to perform integrity protection on a part of data packets in a MAC PDU. After receiving a first data packet and a second data packet from the terminal, a second network device sends the first data packet, the second data packet, and first indication information to the first network device, to indicate that the two data packets belong to a same MAC PDU. When failing to perform integrity verification on the first data packet based on the first indication information fails, the first network device discards the foregoing two data packets. This reduces complexity of integrity protection.

## Description

This application claims priority to Chinese Patent Application No. 202210182295.3, filed with the China National Intellectual Property Administration on February 25, 2022, and entitled "DATA PACKET INTEGRITY PROTECTION METHOD AND APPARATUS, AND STORAGE MEDIUM", which is incorporated herein by reference in its entirety.

### TECHNICAL FIELD

This application relates to the field of communication technologies, and in particular, to a data packet integrity protection method and apparatus, and a storage medium.

### BACKGROUND

In a 5^{th} generation (5^{th} generation, 5G) mobile communication network, an integrity protection ("integrity protection" for short) function is supported to ensure security of a transmitted data packet. However, for data packets from one radio bearer (radio bearer, RB), if integrity protection is performed on all the data packets, in a scenario of a large amount of data, performing integrity protection on each data packet causes heavy processing load; or if integrity protection is not performed on all the data packets, a security risk exists, and whether the data packets are tampered with cannot be known.

### SUMMARY

This application provides a data packet integrity protection method and apparatus, and a storage medium, to reduce complexity of integrity protection.

According to a first aspect, a data packet integrity protection method is provided. The method includes: A first network device sends configuration information to a terminal, where the configuration information is used to configure the terminal to perform integrity protection on a part of data packets in a media access control (media access control, MAC) protocol data unit (protocol data unit, PDU); the first network device receives a first data packet, a second data packet, and first indication information from a second network device, where the first data packet is integrity protected, the second data packet is not integrity protected, and the first indication information indicates that the first data packet and the second data packet belong to a same MAC PDU; the first network device performs integrity verification on the first data packet based on the first indication information; and when the integrity verification on the first data packet fails, the first network device discards the first data packet and the second data packet.

In this aspect, when the first network device performs the integrity verification, the first network device configures the terminal to perform the integrity protection on the part of the data packets in the MAC PDU. After receiving an indication indicating that the two data packets belong to the same MAC PDU, the first network device performs the integrity verification on the part of the data packets based on the indication, and when the verification fails, discards the foregoing two data packets. This reduces complexity of integrity protection.

In a possible implementation, the method further includes: The first network device sends second indication information to the second network device. The second indication information includes at least one of the following information: identification information of the first data packet, and identification information of the MAC PDU to which the first data packet and the second data packet belong.

In this implementation, when the verification fails, the first network device indicates, to the second network device, that the verification fails. The second indication information includes the foregoing information. The second network device may determine, based on the foregoing information, that the verification on the first data packet fails or the MAC PDU is tampered with.

In another possible implementation, the first indication information is the identification information of the MAC PDU.

In this implementation, the first network device receives the identification information that is of the MAC PDU and that is sent by the second network device, to determine that the first data packet and the second data packet are from the same MAC PDU.

In still another possible implementation, the method further includes: The first network device sends an integrity verification request to the second network device, where the integrity verification request is used to request the second network device to perform integrity verification on a part of data packets in a MAC PDU; and the first network device receives an integrity verification response from the second network device, where the integrity verification response is used to determine that the second network device does not perform the integrity verification.

In this implementation, when the first network device determines that the second network device does not perform the integrity verification, the first network device performs the integrity verification.

According to a second aspect, a data packet integrity protection method is provided. The method includes: A second network device receives a first data packet and a second data packet from a terminal, where the first data packet is integrity protected, and the second data packet is not integrity protected; the second network device sends the first data packet, the second data packet, and first indication information to a first network device, where the first indication information indicates that the first data packet and the second data packet belong to a same MAC PDU; and when integrity verification performed by the first network device on the first data packet fails, the second network device receives second indication information from the first network device, where the second indication information includes at least one of the following information: identification information of the first data packet, and identification information of the MAC PDU to which the first data packet and the second data packet belong.

In this aspect, when the first network device performs the integrity verification, the second network device sends the two data packets and the first indication information to the first network device when receiving the two data packets from the terminal. The first indication information indicates that the two data packets belong to the same MAC PDU. In this way, the first network device may perform the integrity verification on a part of data packets based on the first indication information, and discard the foregoing two data packets when the verification fails. This reduces complexity of integrity protection.

When the verification fails, the second network device receives the second indication information sent by the first network device. The second indication information indicates that the verification fails, and the second indication information includes the foregoing information. The second network device may determine, based on the foregoing information, that the verification on the first data packet fails or the MAC PDU is tampered with.

In a possible implementation, a network device in which the first data packet is terminated is the second network device, and a network device in which the second data packet is terminated is the first network device. The method further includes: The second network device discards the first data packet based on the second indication information.

In this implementation, after the second network device receives the second indication information, where the second indication information indicates that the verification fails, the second network device discards the cached first data packet, to improve utilization of cache space.

In another possible implementation, the first indication information is the identification information of the MAC PDU.

In this implementation, the second network device sends the identification information of the MAC PDU, to determine that the first data packet and the second data packet are from the same MAC PDU.

In still another possible implementation, the method further includes: The second network device receives an integrity verification request from the first network device, where the integrity verification request is used to request the second network device to perform integrity verification on a part of data packets in a MAC PDU; and the second network device sends an integrity verification response to the first network device, where the integrity verification response is used to indicate to determine that the second network device does not perform the integrity verification.

In this implementation, when the first network device determines that the second network device does not perform the integrity verification, the first network device performs the integrity verification.

In still another possible implementation, the method further includes: The second network device backs off a radio link control receive window to receive the retransmitted first data packet.

In this implementation, after the second network device receives the second indication information, when it is determined that the verification on the first data packet fails or the MAC PDU is tampered with, the radio link control receive window is backed off to receive the retransmitted first data packet. This improves reliability of data transmission.

According to a third aspect, a data packet integrity protection method is provided. The method includes: A second network device receives a first data packet and a second data packet from a terminal, where the first data packet is integrity protected, the second data packet is not integrity protected, and the first data packet and the second data packet belong to a same MAC PDU; the second network device performs integrity verification on the first data packet; and when the integrity verification on the first data packet fails, the second network device discards the first data packet and the second data packet.

In this aspect, after the second network device receives the first data packet and the second data packet from the terminal, the second network device performs the integrity verification on the first data packet. When the integrity verification fails, the second network device discards the foregoing two data packets. This reduces complexity of integrity protection.

In a possible implementation, a network device in which the first data packet is terminated is the second network device, and a network device in which the second data packet is terminated is the first network device. When the integrity verification on the first data packet succeeds, the method further includes: The second network device processes the second data packet to obtain a third data packet; and the second network device sends the third data packet to the first network device.

In this implementation, after verification on a part of data packets in the MAC PDU succeeds, the second network device may process other data packets sent to the first network device, and send processed data packets to the first network device, and the first network device does not need to perform the verification again. This improves verification efficiency and reduces complexity of integrity protection.

In another possible implementation, the method further includes: The second network device receives an integrity verification request from the first network device, where the integrity verification request is used to request the second network device to perform the integrity verification on the part of the data packets in the MAC PDU; and the second network device sends an integrity verification response to the first network device, where the integrity verification response is used to indicate to determine that the second network device performs the integrity verification.

In this implementation, when the second network device determines that the second network device performs the integrity verification, the first network device does not need to perform the integrity verification. This improves accuracy and efficiency of an integrity verification process.

According to a fourth aspect, a data packet integrity protection method is provided. The method includes: A terminal receives configuration information from a first network device, where the configuration information is used to configure the terminal to perform integrity protection both on a part of data packets terminated in the first network device and on a part of data packets terminated in a second network device in a MAC PDU; and the terminal sends a first data packet, a second data packet, a third data packet, and/or a fourth data packet to the second network device, where the first data packet and the second data packet are integrity protected, the third data packet and the fourth data packet are not integrity protected, a network device in which the first data packet and the third data packet are terminated is the first network device, and a network device in which the second data packet and the fourth data packet are terminated is the second network device.

In this aspect, the terminal receives the configuration information from the first network device, and performs the integrity protection both on the part of the data packets terminated in the first network device and on the part of the data packets terminated in the second network device in the MAC PDU. This reduces complexity of integrity protection and improves efficiency of integrity verification.

According to a fifth aspect, a data packet integrity protection method is provided. The method includes: A first network device sends configuration information to a terminal, where the configuration information is used to configure the terminal to perform integrity protection both on a part of data packets terminated in the first network device and on a part of data packets terminated in a second network device in a MAC PDU; the first network device receives a first data packet, a third data packet, and first indication information from the second network device, where the first data packet is integrity protected, the third data packet is not integrity protected, a network device in which the first data packet and the third data packet are terminated is the first network device, and the first indication information indicates that the first data packet and the third data packet belong to a same MAC PDU; the first network device performs integrity verification on the first data packet based on the first indication information; and when the integrity verification on the first data packet fails, the first network device discards the first data packet and the third data packet.

In this aspect, the first network device configures the terminal to perform the integrity protection on the part of the data packets in the MAC PDU. After the second network device receives the first data packet, a second data packet, the third data packet, and/or a fourth data packet from the terminal, the first network device performs the integrity verification on the first data packet terminated in the first network device. When the integrity verification fails, the first network device discards the first data packet and the third data packet. The second network device performs integrity verification on the second data packet terminated in the second network device. When the integrity verification fails, the second network device discards the second data packet and the fourth data packet. This reduces complexity of integrity protection.

In a possible implementation, the first indication information is identification information of the MAC PDU.

In this implementation, the first network device receives the identification information that is of the MAC PDU and that is sent by the second network device, to determine that the first data packet and the second data packet are from the same MAC PDU.

In another possible implementation, the method further includes: The first network device sends an integrity verification request to the second network device, where the integrity verification request is used to request the second network device to perform integrity verification on a data packet terminated in the second network device; and the first network device receives an integrity verification response from the second network device, where the integrity verification response is used to determine that the second network device performs the integrity verification on the data packet terminated in the second network device.

In this implementation, the second network device and the first network device interact with each other, to determine that both the second network device and the first network device perform the integrity verification. This improves accuracy and efficiency of an integrity verification process.

According to a sixth aspect, a data packet integrity protection method is provided. The method includes: A second network device receives a first data packet, a second data packet, a third data packet, and/or a fourth data packet from a terminal, where the first data packet and the second data packet are integrity protected, the third data packet and the fourth data packet are not integrity protected, a network device in which the first data packet and the third data packet are terminated is a first network device, and a network device in which the second data packet and the fourth data packet are terminated is the second network device; the second network device sends the first data packet, the third data packet, and first indication information to the first network device, where the first indication information indicates that the first data packet and the third data packet belong to a same MAC PDU; the second network device performs integrity verification on the second data packet; and when the integrity verification on the second data packet fails, the second network device discards the second data packet and the fourth data packet.

In this aspect, the first network device configures the terminal to perform integrity protection on a part of data packets in a MAC PDU. After the second network device receives the first data packet, the second data packet, the third data packet, and/or the fourth data packet from the terminal, the first network device performs integrity verification on the first data packet terminated in the first network device. When the integrity verification fails, the first network device discards the first data packet and the third data packet. The second network device performs integrity verification on the second data packet terminated in the second network device. When the integrity verification fails, the second network device discards the second data packet and the fourth data packet. This reduces complexity of integrity protection.

In a possible implementation, the first indication information is identification information of the MAC PDU.

In this implementation, the second network device sends the identification information of the MAC PDU to the first network device, to indicate that the first data packet and the second data packet are from the same MAC PDU.

In another possible implementation, the method further includes: The second network device receives an integrity verification request from the first network device, where the integrity verification request is used to request the second network device to perform integrity verification on a data packet terminated in the second network device; and the second network device sends an integrity verification response to the first network device, where the integrity verification response is used to determine that the second network device performs the integrity verification on the data packet terminated in the second network device.

In this implementation, the second network device and the first network device interact with each other, to determine that both the second network device and the first network device perform the integrity verification. This improves accuracy and efficiency of an integrity verification process.

According to a seventh aspect, a data packet integrity protection method is provided. The method includes: A first network device sends auxiliary information to a second network device, where the auxiliary information includes expected first percentage information that is of data packets to be integrity protected and that is in a MAC PDU; the first network device receives a first data packet and a second data packet from the second network device, where the first data packet is integrity protected, and the second data packet is not integrity protected; and the first network device sends the MAC PDU to a terminal, where the MAC PDU includes the first data packet and the second data packet.

In this aspect, the first network device sends, to the second network device, the expected first percentage information that is of the data packets to be integrity protected and that is in the MAC PDU, so that the second network device determines, based on the first percentage information, a quantity of partial data packets to be integrity protected. This may implement partial integrity protection more effectively.

According to an eighth aspect, a data packet integrity protection method is provided. The method includes: A second network device receives auxiliary information from a first network device, where the auxiliary information includes expected first percentage information that is of data packets to be integrity protected and that is in a MAC PDU; the second network device determines a first data packet and a second data packet based on the first percentage information, where the first data packet is integrity protected, and the second data packet is not integrity protected; and the second network device sends the first data packet and the second data packet to the first network device.

In this aspect, the second network device receives the expected first percentage information that is of the data packets to be integrity protected, that is in the MAC PDU, and that is sent by the first network device, so that the second network device determines, based on the first percentage information, a quantity of partial data packets to be integrity protected. This may implement partial integrity protection more effectively.

In a possible implementation, the method further includes: The second network device determines expected second percentage information that is of data packets to be integrity protected and that is in a MAC PDU; and the second network device sends a second MAC PDU to a terminal based on the second percentage information, where the second MAC PDU includes at least one third data packet and at least one fourth data packet, the at least one third data packet is integrity protected, and the at least one fourth data packet is not integrity protected.

In this implementation, the second network device determines the second percentage information that is of the data packets to be integrity protected, that is in the MAC PDU, and that is sent on a link through which the second network device communicates with the terminal, and determines, based on the second percentage information, a quantity of partial data packets to be integrity protected. This improves efficiency of integrity protection, and reduces complexity of integrity protection.

According to a ninth aspect, a data packet integrity protection apparatus is provided. The data packet integrity protection apparatus may implement the method according to the first aspect. For example, the data packet integrity protection apparatus may be a chip or a first network device. The foregoing method may be implemented by software, hardware, or hardware executing corresponding software.

In a possible implementation, the apparatus includes a transceiver unit and a processing unit. The transceiver unit is configured to send configuration information to a terminal. The configuration information is used to configure the terminal to perform integrity protection on a part of data packets in a MAC PDU. The transceiver unit is further configured to receive a first data packet, a second data packet, and first indication information from a second network device. The first data packet is integrity protected, the second data packet is not integrity protected, and the first indication information indicates that the first data packet and the second data packet belong to a same MAC PDU. The processing unit is configured to perform integrity verification on the first data packet based on the first indication information. In addition, the processing unit is further configured to: when the integrity verification on the first data packet fails, discard the first data packet and the second data packet.

Optionally, the transceiver unit is further configured to send second indication information to the second network device. The second indication information includes at least one of the following information: identification information of the first data packet, and identification information of the MAC PDU to which the first data packet and the second data packet belong.

Optionally, the first indication information is the identification information of the MAC PDU.

Optionally, the transceiver unit is further configured to send an integrity verification request to the second network device. The integrity verification request is used to request the second network device to perform integrity verification on a part of data packets in a MAC PDU. In addition, the transceiver unit is further configured to receive an integrity verification response from the second network device. The integrity verification response is used to determine that the second network device does not perform the integrity verification.

In another possible implementation, the data packet integrity protection apparatus is configured to perform the method according to the first aspect and the possible implementations of the first aspect.

According to a tenth aspect, a data packet integrity protection apparatus is provided. The data packet integrity protection apparatus may implement the method according to the second aspect. For example, the data packet integrity protection apparatus may be a chip or a second network device. The foregoing method may be implemented by software, hardware, or hardware executing corresponding software.

In a possible implementation, the apparatus includes a transceiver unit and a processing unit. The transceiver unit is configured to receive a first data packet and a second data packet from a terminal. The first data packet is integrity protected, and the second data packet is not integrity protected. The transceiver unit is further configured to send the first data packet, the second data packet, and first indication information to a first network device. The first indication information indicates that the first data packet and the second data packet belong to a same MAC PDU. In addition, the transceiver unit is further configured to: when integrity verification performed by the first network device on the first data packet fails, receive second indication information from the first network device. The second indication information includes at least one of the following information: identification information of the first data packet, and identification information of the MAC PDU to which the first data packet and the second data packet belong.

Optionally, a network device in which the first data packet is terminated is the second network device, and a network device in which the second data packet is terminated is the first network device. The processing unit is configured to discard the first data packet based on the second indication information.

Optionally, the first indication information is the identification information of the MAC PDU.

Optionally, the transceiver unit is further configured to receive an integrity verification request from the first network device. The integrity verification request is used to request the second network device to perform integrity verification on a part of data packets in a MAC PDU. In addition, the transceiver unit is further configured to send an integrity verification response to the first network device. The integrity verification response is used to indicate to determine that the second network device does not perform the integrity verification.

Optionally, the processing unit is further configured to back off a radio link control receive window to receive the retransmitted first data packet.

In another possible implementation, the data packet integrity protection apparatus is configured to perform the method according to the second aspect and the possible implementations of the second aspect.

According to an eleventh aspect, a data packet integrity protection apparatus is provided. The data packet integrity protection apparatus may implement the method according to the third aspect. For example, the data packet integrity protection apparatus may be a chip or a second network device. The foregoing method may be implemented by software, hardware, or hardware executing corresponding software.

In a possible implementation, the apparatus includes a transceiver unit and a processing unit. The transceiver unit is configured to receive a first data packet and a second data packet from a terminal. The first data packet is integrity protected, the second data packet is not integrity protected, and the first data packet and the second data packet belong to a same MAC PDU. The processing unit is configured to perform integrity verification on the first data packet. In addition, the processing unit is further configured to: when the integrity verification on the first data packet fails, discard the first data packet and the second data packet.

Optionally, a network device in which the first data packet is terminated is the second network device, and a network device in which the second data packet is terminated is a first network device. The processing unit is further configured to: when the integrity verification on the first data packet succeeds, process the second data packet to obtain a third data packet. In addition, the transceiver unit is further configured to send the third data packet to the first network device.

Optionally, the transceiver unit is further configured to receive an integrity verification request from the first network device. The integrity verification request is used to request the second network device to perform integrity verification on a part of data packets in a MAC PDU. In addition, the transceiver unit is further configured to send an integrity verification response to the first network device. The integrity verification response is used to indicate to determine that the second network device performs the integrity verification.

In another possible implementation, the data packet integrity protection apparatus is configured to perform the method according to the third aspect and the possible implementations of the third aspect.

According to a twelfth aspect, a data packet integrity protection apparatus is provided. The data packet integrity protection apparatus may implement the method according to the fourth aspect. For example, the data packet integrity protection apparatus may be a chip or a terminal. The foregoing method may be implemented by software, hardware, or hardware executing corresponding software.

In a possible implementation, the apparatus includes a transceiver unit. The transceiver unit is configured to receive configuration information from a first network device. The configuration information is used to configure the terminal to perform integrity protection both on a part of data packets terminated in the first network device and on a part of data packets terminated in a second network device in a MAC PDU. In addition, the transceiver unit is further configured to send a first data packet, a second data packet, a third data packet, and/or a fourth data packet to the second network device. The first data packet and the second data packet are integrity protected, the third data packet and the fourth data packet are not integrity protected, a network device in which the first data packet and the third data packet are terminated is the first network device, and a network device in which the second data packet and the fourth data packet are terminated is the second network device.

In another possible implementation, the data packet integrity protection apparatus is configured to perform the method according to the fourth aspect and the possible implementations of the fourth aspect.

According to a thirteenth aspect, a data packet integrity protection apparatus is provided. The data packet integrity protection apparatus may implement the method according to the fifth aspect. For example, the data packet integrity protection apparatus may be a chip or a first network device. The foregoing method may be implemented by software, hardware, or hardware executing corresponding software.

In a possible implementation, the apparatus includes a transceiver unit and a processing unit. The transceiver unit is configured to send configuration information to a terminal. The configuration information is used to configure the terminal to perform integrity protection both on a part of data packets terminated in the first network device and on a part of data packets terminated in a second network device in a MAC PDU. The transceiver unit is further configured to receive a first data packet, a third data packet, and first indication information from the second network device. The first data packet is integrity protected, the third data packet is not integrity protected, a network device in which the first data packet and the third data packet are terminated is the first network device, and the first indication information indicates that the first data packet and the third data packet belong to a same MAC PDU. The processing unit is configured to perform integrity verification on the first data packet based on the first indication information. In addition, the processing unit is further configured to: when the integrity verification on the first data packet fails, discard the first data packet and the third data packet.

Optionally, the first indication information is identification information of the MAC PDU.

Optionally, the transceiver unit is further configured to send an integrity verification request to the second network device. The integrity verification request is used to request the second network device to perform integrity verification on a data packet terminated in the second network device. In addition, the transceiver unit is further configured to receive an integrity verification response from the second network device. The integrity verification response is used to determine that the second network device performs the integrity verification on the data packet terminated in the second network device.

In another possible implementation, the data packet integrity protection apparatus is configured to perform the method according to the fifth aspect and the possible implementations of the fifth aspect.

According to a fourteenth aspect, a data packet integrity protection apparatus is provided. The data packet integrity protection apparatus may implement the method according to the sixth aspect. For example, the data packet integrity protection apparatus may be a chip or a second network device. The foregoing method may be implemented by software, hardware, or hardware executing corresponding software.

In a possible implementation, the apparatus includes a transceiver unit and a processing unit. The transceiver unit is configured to receive a first data packet, a second data packet, a third data packet, and/or a fourth data packet from a terminal. The first data packet and the second data packet are integrity protected, the third data packet and the fourth data packet are not integrity protected, a network device in which the first data packet and the third data packet are terminated is a first network device, and a network device in which the second data packet and the fourth data packet are terminated is the second network device. The transceiver unit is further configured to send the first data packet, the third data packet, and first indication information to the first network device. The first indication information indicates that the first data packet and the third data packet belong to a same MAC PDU. The processing unit is configured to perform integrity verification on the second data packet. In addition, the processing unit is further configured to: when the integrity verification on the second data packet fails, discard the second data packet and the fourth data packet.

Optionally, the first indication information is identification information of the MAC PDU.

Optionally, the transceiver unit is further configured to receive an integrity verification request from the first network device. The integrity verification request is used to request the second network device to perform integrity verification on a data packet terminated in the second network device. In addition, the transceiver unit is further configured to send an integrity verification response to the first network device. The integrity verification response is used to determine that the second network device performs the integrity verification on the data packet terminated in the second network device.

In another possible implementation, the data packet integrity protection apparatus is configured to perform the method according to the sixth aspect and the possible implementations of the sixth aspect.

According to a fifteenth aspect, a data packet integrity protection apparatus is provided. The data packet integrity protection apparatus may implement the method according to the seventh aspect. For example, the data packet integrity protection apparatus may be a chip or a first network device. The foregoing method may be implemented by software, hardware, or hardware executing corresponding software.

In a possible implementation, the apparatus includes a transceiver unit. The transceiver unit is configured to send auxiliary information to a second network device. The auxiliary information includes expected first percentage information that is of data packets to be integrity protected and that is in a MAC PDU. The transceiver unit is further configured to receive a first data packet and a second data packet from the second network device. The first data packet is integrity protected, and the second data packet is not integrity protected. In addition, the transceiver unit is further configured to send the MAC PDU to a terminal. The MAC PDU includes the first data packet and the second data packet.

In another possible implementation, the data packet integrity protection apparatus is configured to perform the method according to the seventh aspect and the possible implementations of the seventh aspect.

According to a sixteenth aspect, a data packet integrity protection apparatus is provided. The data packet integrity protection apparatus may implement the method according to the eighth aspect. For example, the data packet integrity protection apparatus may be a chip or a second network device. The foregoing method may be implemented by software, hardware, or hardware executing corresponding software.

In a possible implementation, the apparatus includes a transceiver unit and a processing unit. The transceiver unit is configured to receive auxiliary information from a first network device. The auxiliary information includes expected first percentage information that is of data packets to be integrity protected and that is in a MAC PDU. The processing unit is configured to determine a first data packet and a second data packet based on the first percentage information. The first data packet is integrity protected, and the second data packet is not integrity protected. In addition, the transceiver unit is further configured to send the first data packet and the second data packet to the first network device.

Optionally, the processing unit is further configured to determine expected second percentage information that is of data packets to be integrity protected and that is in a MAC PDU. In addition, the processing unit is further configured to send a second MAC PDU to a terminal based on the second percentage information. The second MAC PDU includes at least one third data packet and at least one fourth data packet, the at least one third data packet is integrity protected, and the at least one fourth data packet is not integrity protected.

In another possible implementation, the data packet integrity protection apparatus is configured to perform the method according to the eighth aspect and the possible implementations of the eighth aspect.

In still another possible implementation, the data packet integrity protection apparatus according to the ninth aspect to the sixteenth aspect includes a processor coupled to a memory. The processor is configured to support the apparatus in performing a corresponding function in the data packet integrity protection method. The memory is configured to be coupled to the processor, and stores a computer program (or computer-executable instructions) and/or data required for the apparatus. Optionally, the data packet integrity protection apparatus may further include a communication interface, configured to support communication between the apparatus and another network element, for example, sending or receiving of data and/or a signal. For example, the communication interface may be a transceiver, a circuit, a bus, a module, or a communication interface of another type. Optionally, the memory may be located inside the data packet integrity protection apparatus and integrated with the processor, or may be located outside the data packet integrity protection apparatus.

In another possible implementation, the data packet integrity protection apparatus according to the ninth aspect to the sixteenth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to perform the foregoing method by using a logic circuit or executing code instructions. The transceiver apparatus may be a transceiver, a transceiver circuit, or an input/output interface, and is configured to receive a signal from another data packet integrity protection apparatus other than the data packet integrity protection apparatus and transmit the signal to the processor, or send a signal from the processor to another data packet integrity protection apparatus other than the data packet integrity protection apparatus. When the data packet integrity protection apparatus is a chip, the transceiver apparatus is a transceiver circuit or an input/output interface.

When the data packet integrity protection apparatus according to the ninth aspect to the sixteenth aspect is a chip, a sending unit may be an output unit, for example, an output circuit or a communication interface, and a receiving unit may be an input unit, for example, an input circuit or a communication interface. When the data packet integrity protection apparatus is a terminal, a sending unit may be a transmitter or a transmitter machine, and a receiving unit may be a receiver or a receiver machine.

According to a seventeenth aspect, a communication system is provided. The communication system includes the data packet integrity protection apparatus according to the ninth aspect and the tenth aspect, includes the data packet integrity protection apparatus according to the eleventh aspect, includes the data packet integrity protection apparatus according to the twelfth aspect to the fourteenth aspect, or includes the data packet integrity protection apparatus according to the fifteenth aspect and the sixteenth aspect.

According to an eighteenth aspect, a computer-readable storage medium is provided. The computer-readable storage medium stores a computer program or instructions. When the program or the instructions are executed by a processor, the method according to any one of the first aspect to the eighth aspect is performed.

According to a nineteenth aspect, a computer program product is provided. When the computer program product is executed on a computing device, the method according to any one of the first aspect to the eighth aspect is performed.

### BRIEF DESCRIPTION OF DRAWINGS

FIG. 1 is a diagram of integrity protection performed by a sender and a receiver;
FIG. 2 is a diagram of a specific example of a 5G communication system according to an embodiment of this application;
FIG. 3 is a diagram of a communication system according to this application;
FIG. 4 is a diagram of a CU/DU separation architecture according to this application;
FIG. 5 is a diagram of NR-DC and EN-DC structures according to this application;
FIG. 6 is a schematic flowchart of a data packet integrity protection method according to an embodiment of this application;
FIG. 7 is a schematic flowchart of another data packet integrity protection method according to an embodiment of this application;
FIG. 8 is a schematic flowchart of still another data packet integrity protection method according to an embodiment of this application;
FIG. 9 is a diagram of a format of a MAC PDU in the embodiment shown in FIG. 8;
FIG. 10 is a schematic flowchart of still another data packet integrity protection method according to an embodiment of this application;
FIG. 11 is a schematic flowchart of still another data packet integrity protection method according to an embodiment of this application;
FIG. 12 is a diagram of a format of a MAC PDU in the embodiment shown in FIG. 11;
FIG. 13 is a schematic flowchart of still another data packet integrity protection method according to an embodiment of this application;
FIG. 14 is a schematic flowchart of still another data packet integrity protection method according to an embodiment of this application;
FIG. 15 is a diagram of a format of a MAC PDU in the embodiment shown in FIG. 14;
FIG. 16 is a schematic flowchart of still another data packet integrity protection method according to an embodiment of this application;
FIG. 17 is a schematic flowchart of still another data packet integrity protection method according to an embodiment of this application;
FIG. 18 is a schematic flowchart of still another data packet integrity protection method according to an embodiment of this application;
FIG. 19 is a diagram of a structure of a data packet integrity protection apparatus according to an embodiment of this application; and
FIG. 20 is a diagram of a structure of another data packet integrity protection apparatus according to an embodiment of this application.

### DESCRIPTION OF EMBODIMENTS

The following describes embodiments of this application with reference to the accompanying drawings in embodiments of this application.

First, a concept of integrity protection is introduced.

The purpose of integrity protection is to protect, by preventing or detecting a threat, integrity of data that may be compromised in different ways and integrity of attributes related to the data. Many open system applications have security requirements that depend on data integrity.

The goal of integrity protection is to protect data from unauthorized modification, including unauthorized creation and deletion of data. Integrity protection may be completed through the following actions.
(1) Shielding: Generate integrity-protected data from data.
(2) Verification: Check the integrity-protected data to detect an integrity fault.
(3) Unshielding: Regenerate data from the integrity-protected data.

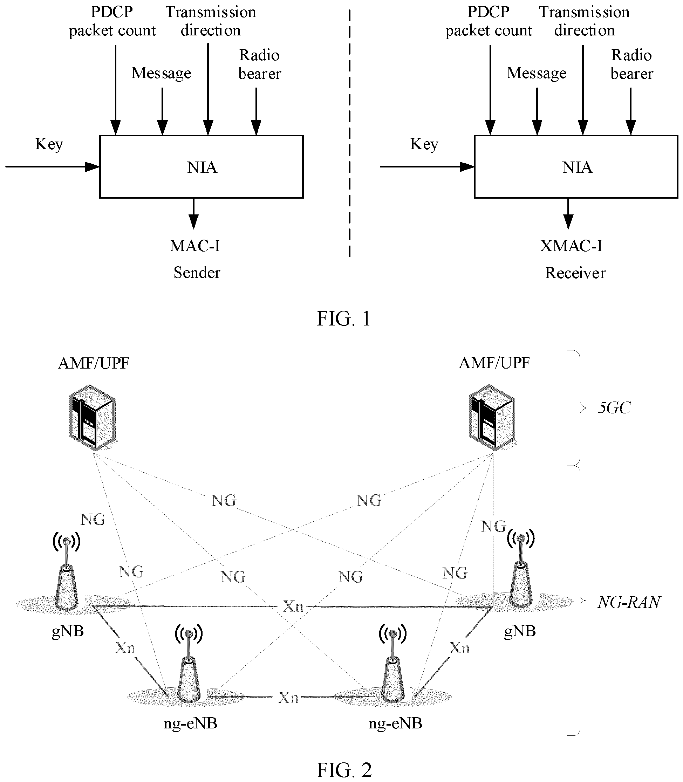

In a 5G network, 3GPP supports an integrity protection function for data security. Specifically, as shown in FIG. 1 which is a diagram of integrity protection performed by a sender and a receiver, the sender uses regularly changed input parameters and transmitted data to obtain a message authentication code for integrity (message authentication code for integrity, MAC-I) through operation according to specific rules. Input parameters of an integrity protection algorithm include an integrity protection key (KEY), a packet data convergence protocol (packet data convergence protocol, PDCP) packet count (COUNT), a bearer identifier (BEARER ID), a transmission direction (DIRECTION), and a message (MESSAGE). Based on these input parameters, the sender uses an integrity protection algorithm NIA to calculate a 32-bit (taking a 128-bit algorithm as an example) MAC-I.

Table 1 below shows meanings of the foregoing input parameters.

**Table 1**

| Input parameter | Meaning |
|---|---|
| KEY | Integrity protection key. UE obtains the integrity protection key from a universal subscriber identity module (universal subscriber identity module, USIM), and a gNodeB side obtains the integrity protection key through calculation by using a root key stored in unified data management (UDM). |
| COUNT | PDCP packet count. Uplink and downlink each correspond to one COUNT. When an uplink or downlink COUNT is reversed, a key update is triggered to prevent duplicate key streams from being generated. |
| MESSAGE | Message bitstream |
| DIRECTION | Indicates uplink or downlink. For example, 0 indicates UE -> gNodeB, and 1 indicates gNodeB -> UE. |
| BEARER ID | Bearer identifier |

The sender adds the MAC-I to an end of a data packet.

The receiver uses the same parameters and the same rules to obtain an expected message authentication code for integrity (expected message authentication code for integrity, XMAC-I) through calculation, and compares the MAC-I with the XMAC-I to determine whether received data is complete. If the MAC-I and the XMAC-I are the same, the data is complete. In this way, the purpose of protecting data integrity is achieved.

However, in a next-generation wireless communication network, for data packets from one RB, if integrity protection is performed on all the data packets, in a scenario of a large amount of data, performing integrity protection on each data packet causes heavy processing load; or if integrity protection is not performed on all the data packets, a security risk exists, and whether the data packets are tampered with cannot be known.

This application provides a data packet integrity protection solution. A first network device configures a terminal to perform integrity protection on a part of data packets in a MAC PDU. After receiving a first data packet and a second data packet from the terminal, a second network device sends the first data packet, the second data packet, and first indication information to the first network device, to indicate that the two data packets belong to a same MAC PDU. When failing to perform integrity verification on the first data packet based on the first indication information fails, the first network device discards the foregoing two data packets. This reduces complexity of integrity protection.

The technical solutions in embodiments of this application may be applied to various communication systems, such as a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5^{th} generation (5th generation, 5G) system, or a new radio (new radio, NR) system.

FIG. 2 is a diagram of a specific example of a 5G communication system according to an embodiment of this application. The communication system includes a terminal (not shown in the figure), a radio access network (radio access network, RAN) node, and a 5G core (5^{th} generation core, SGC) network. The RAN node includes gNBs or ng-eNBs. The gNB provides a terminating point of NR user plane and control plane protocols, and the ng-eNB provides a terminating point of E-UTRAN user plane and control plane protocol stacks.

Connections may be established between the gNB and the gNB, between the gNB and the ng-eNB, and between the ng-eNB and ng-eNB through Xn interfaces.

The gNBs and the ng-eNBs are connected to the SGC through NG interfaces. Specifically, the gNBs and the ng-eNBs are connected to an access mobility management function (access and mobility manage function, AMF) through NG-C interfaces, and are connected to a user plane function (user plane function, UPF) through NR-U interfaces.

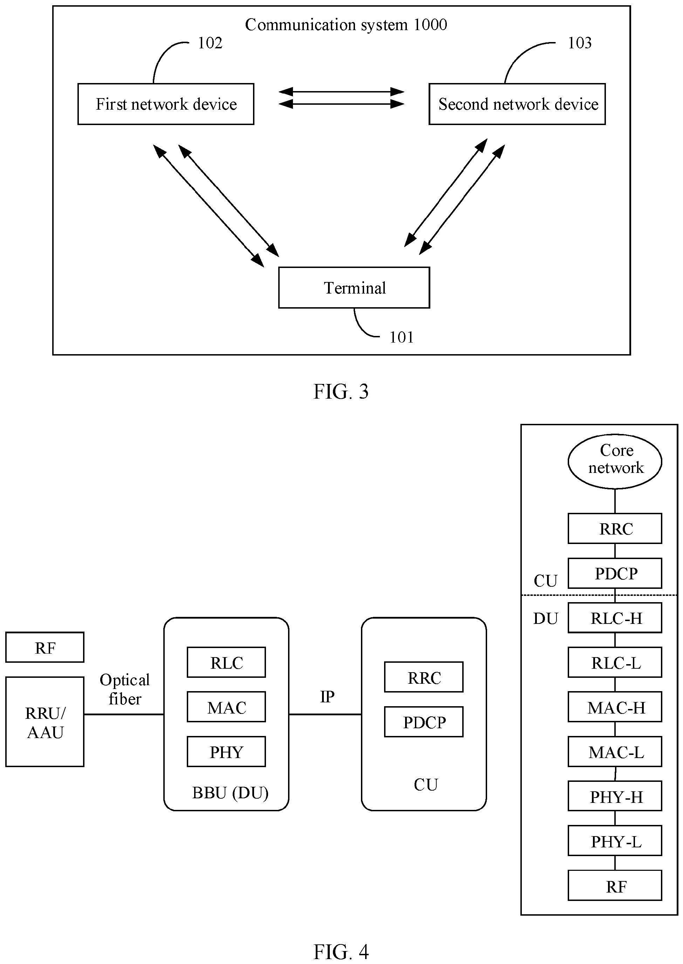

FIG. 3 is a diagram of a communication system according to this application. The communication system 1000 includes a terminal 101, a first network device 102, and a second network device 103. The terminal 101, the first network device 102, and the second network device 103 may communicate with each other.

In an implementation, in a central unit (central unit, CU)/distributed unit (distributed unit, DU) separation scenario, the first network device 102 may be a gNB CU, and the second network device 103 may be a gNB DU.

Specifically, a conventional baseband processing unit (baseband unit, BBU) uses a CU/DU integrated deployment. FIG. 4 is a diagram of a CU/DU separation architecture. A 5G base station supports CU/DU separation deployment. A gNB CU (a non-real-time part) may be centrally deployed on a general-purpose server, and a gNB DU (a real-time part) is deployed on BBU dedicated hardware. Specifically, CU/DU separation means that a non-real-time part (packet data convergence protocol (packet data convergence protocol, PDCP)/radio resource control (radio resource control, RRC)) in a BBU is separated as the gNB CU, and the gNB CU may be deployed on a cloud. However, a real-time part (physical layer (physical layer, PHY)/media access control (media access control, MAC)/radio link control (radio link control, RLC) layer) still needs to be processed by a dedicated chip. Currently, a general-purpose X86 chip cannot efficiently process the real-time part, and an energy efficiency ratio of the dedicated chip is more than 10 times that of the general-purpose chip.

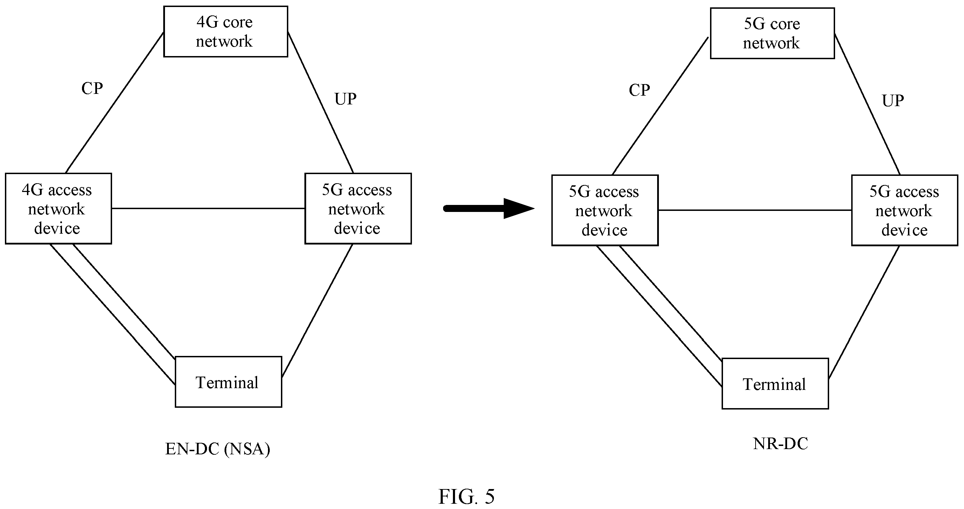

In another implementation, in an NR dual connection scenario, the first network device 102 may be a master gNodeB (master gNodeB, MN), and the second network device 103 may be a secondary gNodeB (secondary gNodeB, SN). The NR dual connection is called NR-DC. FIG. 5 is a diagram of NR-DC and EN-DC structures. NR-DC is a networking type close to EN-DC (NSA), but two access network devices connected to terminals are all 5G access network devices. In a dual connection (DC) scenario, data between the master gNodeB and the secondary gNodeB is split through XN. Therefore, Xn split bearers (Xn GTP-U) need to be applied for on both the master gNodeB and the secondary gNodeB. In an NSA scenario, a split bearer establishment procedure is as follows: 1. The MN first applies to a platform for a general packet radio service (general packet radio service, GPRS) tunneling protocol user plane (GPRS tunneling protocol user plane, GTPU) (for sending an ALLOC message). Because the MN does not know an address of the SN at this time, the GTPU is not activated. 2. After successfully applying for the GTPU, the MN carries a local address to the SN. After obtaining the address of the MN, the SN applies to the platform for the GTPU and completes activating the GTPU.

The terminal 101 is a device having a wireless transceiver function, and may be deployed on the land, including indoor or outdoor, hand-held, wearable, or vehicle-mounted deployment; may be deployed on a water surface, for example, on a ship; or may be deployed in the air, for example, on aircraft, a balloon, and a satellite. The terminal may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. The terminal sometimes may also be referred to as user equipment (user equipment, UE), an access terminal, a UE unit, a mobile station, a remote station, a remote terminal, a mobile device, a terminal (terminal), a wireless communication device, a UE agent, a UE apparatus, or the like.

The first network device 102/the second network device 103 may be a base station (base station), an evolved NodeB (evolved NodeB, eNodeB), a transmission reception point (transmission reception point, TRP), a next generation NodeB (next generation NodeB, gNB) in a 5^{th} generation (5th generation, 5G) mobile communication system, a next generation base station in a 6^{th} generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The first network device 102/the second network device 103 may be a macro base station, may be a micro base station or an indoor station, or may be a relay node, a donor node, or the like. A specific technology and a specific device form used by the first network device 102/the second network device 103 are not limited in embodiments of this application. For ease of description, the following uses an example in which the base station serves as the first network device 102/the second network device 103 for description.

In embodiments of this application, a function of the first network device 102/the second network device 103 may also be performed by a module (for example, a chip) in the first network device 102/the second network device 103, or may be performed by a control subsystem including the function of the first network device 102/the second network device 103. The control subsystem herein including the function of the first network device 102/the second network device 103 may be a control center in the foregoing application scenarios such as the smart grid, the industrial control, a smart transportation, and the smart city. A function of the terminal 101 may also be performed by a module (for example, a chip or a modem) in the terminal 101, or may be performed by an apparatus including the function of the terminal 101.

In this application, the first network device 102/the second network device 103 may send a downlink signal or downlink information to the terminal 101. The downlink information is carried on a downlink channel. The terminal 101 sends an uplink signal or uplink information to the first network device 102/the second network device 103. The uplink information is carried on an uplink channel. To communicate with the first network device 102/the second network device 103, the terminal 101 needs to establish a wireless connection with a cell controlled by the first network device 102/the second network device 103. The cell that establishes the wireless connection with the terminal 101 is referred to as a serving cell of the terminal 101. When communicating with the serving cell, the terminal 101 is further interfered with by a signal from a neighboring cell.

The first network device 102/the second network device 103 and the terminal 101 may be at fixed locations, or may be movable. The first network device 102/the second network device 103 and the terminal 101 may be deployed on the land, including indoor or outdoor, handheld, or vehicle-mounted deployment; may be deployed on a water surface; or may be deployed on an airplane, a balloon, or a satellite in the air. Application scenarios of the first network device 102/the second network device 103 and the terminal 101 are not limited in embodiments of this application.

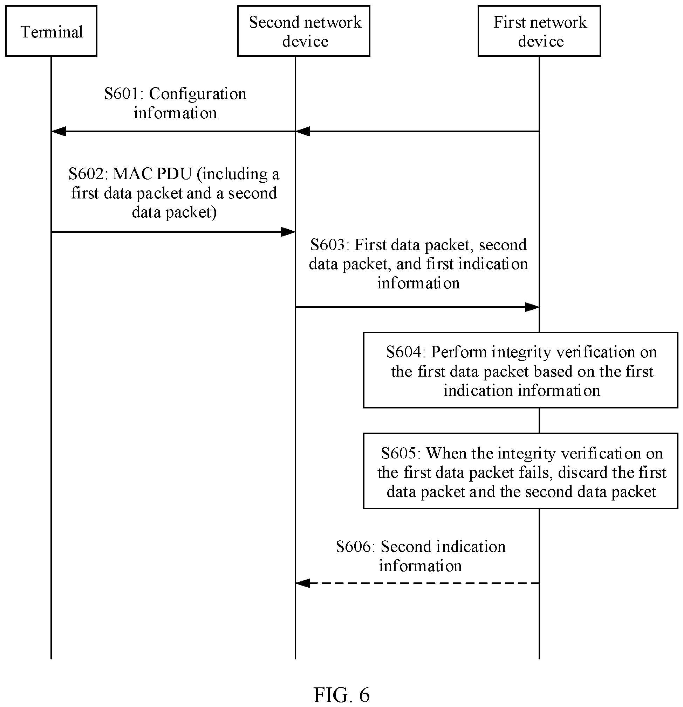

FIG. 6 is a schematic flowchart of a data packet integrity protection method according to an embodiment of this application. The method may include the following steps.

S601: A first network device sends configuration information to a terminal, where the configuration information is used to configure the terminal to perform integrity protection on a part of data packets in a MAC PDU.

The configuration information is used to configure the terminal to perform integrity protection on a part of PDCP PDUs in the MAC PDU. The MAC PDU may include one or more MAC service data units (service data units, SDUs). Each MAC SDU is encapsulated with one MAC PDU. A gNB CU may configure the terminal to perform integrity protection on a part of PDCP PDUs in a to-be-sent MAC PDU, and not to perform integrity protection on remaining PDCP PDUs in the MAC PDU. In this way, load of integrity protection may be reduced.

Optionally, the method may further include the following steps.

The first network device sends an integrity verification request (subset based integrity verification request) to a second network device. The request is used to request the second network device to perform integrity verification on a part of data packets in a MAC PDU.

After receiving the request, the second network device sends an integrity verification response (subset based integrity verification response) to the first network device. The response is used to determine that the second network device does not perform the integrity verification.

Correspondingly, an MN receives the response, and the MN determines that the MN performs the integrity verification on the part of the data packets in the MAC PDU.

S602: The terminal sends the MAC PDU to the second network device, where the MAC PDU includes a first data packet and a second data packet, the first data packet is integrity protected (UPIPed PDCP PDU), and the second data packet is not integrity protected (non-UPIPed PDCP PDU).

Correspondingly, the second network device receives the MAC PDU from the terminal.

The terminal sends the MAC PDU to the second network device. The MAC PDU includes a first MAC SDU and a second MAC SDU. The first MAC SDU includes a first PDCP PDU, and the first PDCP PDU is integrity protected. That is, the first PDCP PDU includes a MAC-I. The second MAC SDU includes a second PDCP PDU, the second PDCP PDU is not integrity protected, and the second PDCP PDU does not include a MAC-I.

The first PDCP PDU and the second PDCP PDU may be from different radio bearers (radio bearers, RBs), or may be from a same RB.

S603: The second network device sends the first data packet, the second data packet, and first indication information to the first network device, where the first indication information indicates that the first data packet and the second data packet belong to a same MAC PDU.

Correspondingly, the first network device receives the first data packet, the second data packet, and the first indication information from the second network device.

After receiving the MAC PDU, the second network device parses the MAC PDU to obtain the first PDCP PDU and the second PDCP PDU, and allocates a MAC SN to the MAC PDU.

Different MAC PDUs correspond to different MAC SNs. A gNB DU allocates MAC SNs to different MAC PDUs.

The second network device sends the first data packet, the second data packet, and the first indication information to the first network device. The first indication information indicates that the first data packet and the second data packet belong to a same MAC PDU. The first indication information may be identification information of the MAC PDU. For example, the first indication information may be the MAC SN. When sending the first PDCP PDU and the second PDCP PDU to the first network device, the second network device sends MAC SNs of the first PDCP PDU and the second PDCP PDU at the same time. If MAC SNs of the two PDCP PDUs are the same, the first PDCP PDU and the second PDCP PDU are from a same MAC PDU.

Optionally, if the second data packet is sent to the second network device, the second network device may further cache the second data packet.

S604: The first network device performs integrity verification on the first data packet based on the first indication information.

After receiving the first PDCP PDU, the second PDCP PDU, and the first indication information, the first network device performs the integrity verification on the first PDCP PDU based on the first indication information.

S605: When the integrity verification on the first data packet fails, the first network device discards the first data packet and the second data packet.

If the integrity verification fails, it indicates that all corresponding MAC PDUs may be tampered with. Based on the first indication information, the gNB CU discards the PDCP PDUs from the same MAC PDU, that is, discards the first PDCP PDU and the second PDCP PDU.

Further, the method may include the following step (represented by a dashed line in the figure).

S606: The first network device sends second indication information to the second network device, where the second indication information includes at least one of the following information: identification information of the first data packet, and identification information of the MAC PDU to which the first data packet and the second data packet belong.

Correspondingly, the second network device receives the second indication information from the first network device.

For example, if the integrity verification fails, the first network device sends to the second network device, identification information of the first PDCP PDU, for example, the identification information of the first PDCP PDU, and/or the MAC SNs of the first PDCP PDU and the second PDCP PDU that belong to the MAC PDU.

After receiving the second indication information, the second network device may perform further processing.

According to the data packet integrity protection method provided in this embodiment of this application, the first network device configures the terminal to perform the integrity protection on the part of the data packets in the MAC PDU. After receiving the first data packet and the second data packet from the terminal, the second network device sends the first data packet, the second data packet, and the first indication information to the first network device, to indicate that the two data packets belong to the same MAC PDU. When failing to perform the integrity verification on the first data packet based on the first indication information fails, the first network device discards the foregoing two data packets. This reduces complexity of integrity protection.

The following further describes in detail the embodiment shown in FIG. 6 by using a CU/DU separation architecture as an example. In this example, the first network device is a gNB CU, and the second network device is a gNB DU.

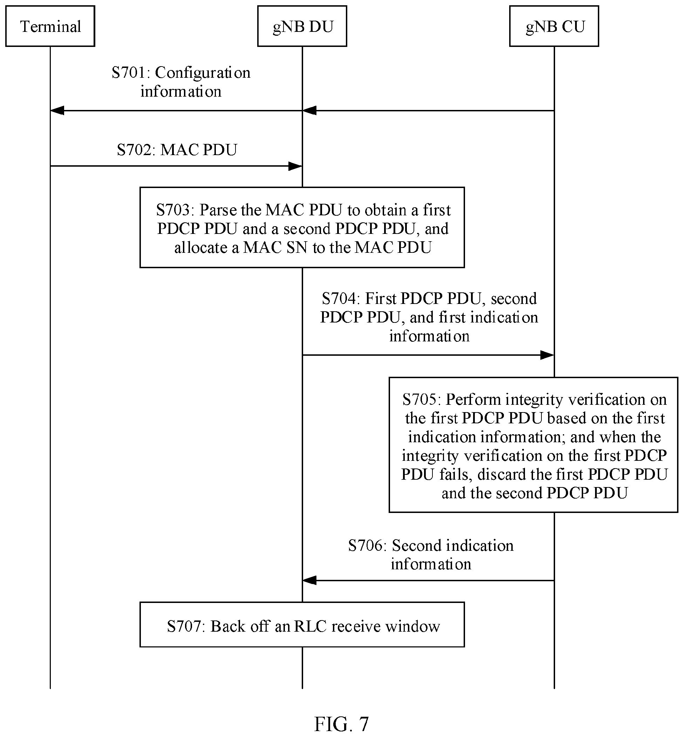

FIG. 7 is a schematic flowchart of another data packet integrity protection method according to an embodiment of this application. The method may include the following steps.

S701: A gNB CU sends configuration information to a terminal.

For example, the gNB CU sends the configuration information to the terminal via a gNB DU. The configuration information is used to configure the terminal to perform integrity protection on a part of PDCP PDUs in a MAC PDU. The MAC PDU may include one or more MAC SDUs. Each MAC SDU is encapsulated with one MAC PDU. The gNB CU may configure the terminal to perform integrity protection on a part of PDCP PDUs in a to-be-sent MAC PDU, and not to perform integrity protection on remaining PDCP PDUs in the MAC PDU. In this way, load of integrity protection may be reduced.

S702: The terminal sends the MAC PDU to the gNB DU.

Correspondingly, the gNB DU receives the MAC PDU from the terminal.

For example, the terminal sends the MAC PDU to the gNB DU. The MAC PDU includes a first MAC SDU and a second MAC SDU. The first MAC SDU includes a first PDCP PDU, and the first PDCP PDU is integrity protected. That is, the first PDCP PDU includes a MAC-I. The second MAC SDU includes a second PDCP PDU, the second PDCP PDU is not integrity protected, and the second PDCP PDU does not include a MAC-I.

The first PDCP PDU and the second PDCP PDU may be from different RBs, or may be from a same RB.

S703: The gNB DU parses the MAC PDU to obtain the first PDCP PDU and the second PDCP PDU, and allocates a MAC SN to the MAC PDU.

Different MAC PDUs correspond to different MAC SNs. The gNB DU allocates MAC SNs to different MAC PDUs.

S704: The gNB DU sends the first PDCP PDU, the second PDCP PDU, and first indication information to the gNB CU, where the first indication information indicates that the first PDCP PDU and the second PDCP PDU belong to/are from a same MAC PDU.

Correspondingly, the gNB CU receives the first PDCP PDU, the second PDCP PDU, and the first indication information from the gNB DU.

The first indication information is identification information of the MAC PDU. For example, the first indication information may be the MAC SN. When sending the first PDCP PDU and the second PDCP PDU to the gNB CU, the gNB DU sends MAC SNs of the first PDCP PDU and the second PDCP PDU at the same time. If MAC SNs of the two PDCP PDUs are the same, the first PDCP PDU and the second PDCP PDU are from the same MAC PDU.

S705: The gNB CU performs integrity verification on the first PDCP PDU based on the first indication information; and when the integrity verification on the first PDCP PDU fails, the gNB CU discards the first PDCP PDU and the second PDCP PDU.

After receiving the first PDCP PDU, the second PDCP PDU, and the first indication information, the gNB CU performs the integrity verification on the first PDCP PDU based on the first indication information.

If the integrity verification fails, it indicates that all corresponding MAC PDUs may be tampered with. Based on the first indication information, the gNB CU discards the PDCP PDUs from the same MAC PDU, that is, discards the first PDCP PDU and the second PDCP PDU.

If the integrity verification succeeds, the gNB CU processes the first PDCP PDU and the second PDCP PDU, including processing such as decryption and sequential delivery.

S706: The gNB CU sends second indication information to the gNB DU, where the second indication information includes at least one of the following information: identification information of the first PDCP PDU, and identification information of the MAC PDU to which the first PDCP PDU and the second PDCP PDU belong.

Correspondingly, the gNB DU receives the second indication information from the gNB CU.

For example, if the integrity verification fails, the gNB CU sends to the gNB DU, the identification information of the first PDCP PDU, for example, the identification information of the first PDCP PDU, and/or the MAC SNs of the first PDCP PDU and the second PDCP PDU that belong to the MAC PDU.

S707: After receiving the second indication information, the gNB DU determines that the first PDCP PDU previously received from the terminal is tampered with. Therefore, an RLC receive window of the gNB DU needs to be backed off, to ensure that the gNB DU may again receive the retransmitted first PDCP PDU subsequently sent by the terminal.

In this embodiment, the gNB DU indicates, to the gNB CU, which PDCP PDUs are from the same MAC PDU, so that the gNB CU performs uniform discarding when the integrity verification fails. This implements partial integrity protection of CU-DU and reduces processing overheads of integrity protection.

The following further describes in detail the embodiment shown in FIG. 6 by using a DC architecture as an example. In the DC architecture, implementation of partial integrity protection is mainly applied to DAPS, a split (split) bearer, and a duplicated (duplicated) bearer. In this embodiment, the first network device is an MN, and the second network device is an SN. In other words, the MN is responsible for an integrity verification function.

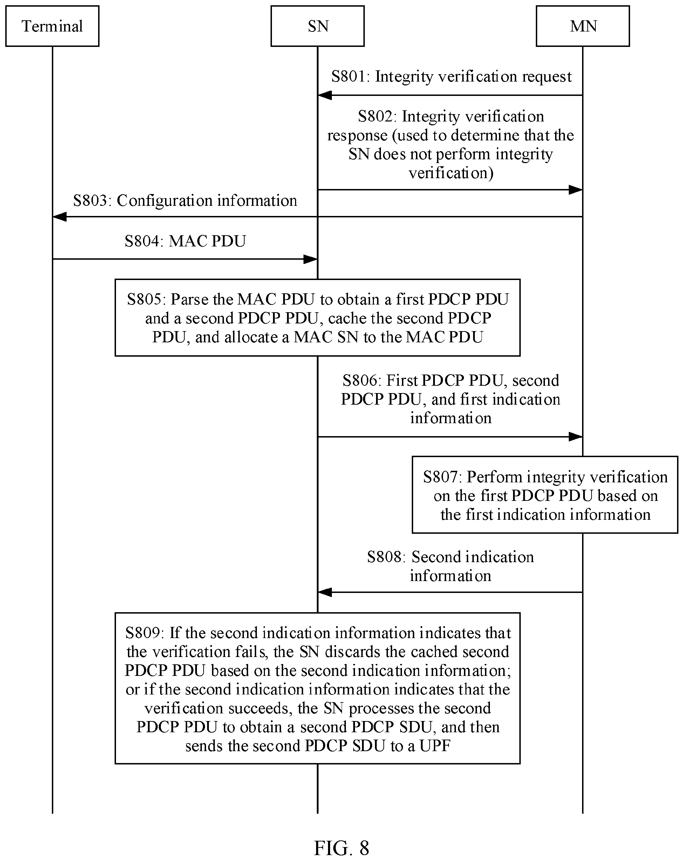

FIG. 8 is a schematic flowchart of still another data packet integrity protection method according to an embodiment of this application. The method may include the following steps.

S801: An MN sends an integrity verification request to an SN, where the request is used to request the SN to perform integrity verification on a part of data packets in a MAC PDU.

S802: After receiving the request, the SN sends an integrity verification response to the MN, where the response is used to determine that the SN does not perform the integrity verification.

Correspondingly, the MN receives the response, and the MN determines that the MN performs integrity verification on a part of data packets in the MAC PDU.

S803: The MN sends configuration information to a terminal.

For example, the MN sends the configuration information to the terminal. The configuration information is used to configure the terminal to perform integrity protection on a part of PDCP PDUs in the MAC PDU. The MAC PDU may include one or more MAC SDUs. Each MAC SDU is encapsulated with one MAC PDU. The MN may configure the terminal to perform integrity protection on a part of PDCP PDUs in a to-be-sent MAC PDU, and not to perform integrity protection on remaining PDCP PDUs in the MAC PDU. In this way, load of integrity protection may be reduced.

S804: The terminal sends the MAC PDU to the SN.

Correspondingly, the SN receives the MAC PDU from the terminal.

For example, the terminal sends the MAC PDU to the SN. The MAC PDU includes a first MAC SDU and a second MAC SDU. The first MAC SDU includes a first PDCP PDU, a network device in which the first PDCP PDU is terminated is the MN, and a PDCP entity of the first PDCP PDU is in the MN. Therefore, the first PDCP PDU needs to be sent to the MN, and the first PDCP PDU is integrity protected. That is, the first PDCP PDU includes a MAC-I. The second MAC SDU includes a second PDCP PDU, a network device in which the second PDCP PDU is terminated is the SN, and a PDCP entity of the second PDCP PDU is in the SN. Therefore, the second PDCP PDU does not need to be sent to the MN, the second PDCP PDU is not integrity protected, and the second PDCP PDU does not include a MAC-I.

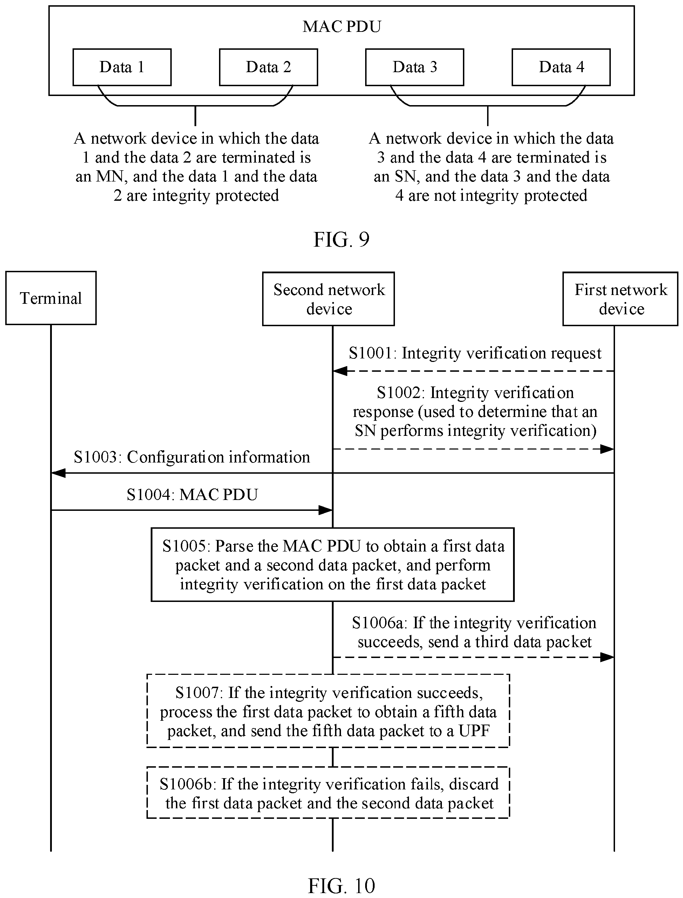

The MAC PDU shown in FIG. 9 includes mixed data. Data 1 and data 2 correspond to the first PDCP PDU, a network device in which the data 1 and the data 2 are terminated is the MN, and the data 1 and the data 2 are integrity protected. Data 3 and data 4 correspond to the second PDCP PDU, a network device in which the data 3 and the data 4 are terminated is the SN, and the data 3 and the data 4 are not integrity protected.

The first PDCP PDU and the second PDCP PDU may be from different RBs, or may be from a same RB.

S805: The SN parses the MAC PDU to obtain the first PDCP PDU and the second PDCP PDU, caches the second PDCP PDU, and allocates a MAC SN to the MAC PDU.

Different MAC PDUs correspond to different MAC SNs. The SN allocates MAC SNs to different MAC PDUs.

S806: The SN sends the first PDCP PDU, the second PDCP PDU, and first indication information to the MN, where the first indication information indicates that the first PDCP PDU and the second PDCP PDU belong to/are from a same MAC PDU.

Correspondingly, the MN receives the first PDCP PDU, the second PDCP PDU, and the first indication information from the SN.

The first indication information is identification information of the MAC PDU. For example, the first indication information may be the MAC SN. When sending the first PDCP PDU and the second PDCP PDU to the MN, the SN sends MAC SNs of the first PDCP PDU and the second PDCP PDU at the same time. If MAC SNs of the two PDCP PDUs are the same, the first PDCP PDU and the second PDCP PDU are from the same MAC PDU.

S807: The MN performs integrity verification on the first PDCP PDU based on the first indication information.

After receiving the first PDCP PDU, the second PDCP PDU, and the first indication information, the MN performs the integrity verification on the first PDCP PDU based on the first indication information.

If the integrity verification fails, it indicates that all corresponding MAC PDUs may be tampered with. Based on the first indication information, the MN discards the PDCP PDU from the same MAC PDU, that is, discards the first PDCP PDU.

If the integrity verification succeeds, the MN processes the first PDCP PDU to obtain a first PDCP SDU, and sends the first PDCP SDU to a UPF.

S808: The MN sends second indication information to the SN, where the second indication information indicates that the verification succeeds or fails, and the second indication information includes at least one of the following information: identification information of the first PDCP PDU, and identification information of the MAC PDU to which the first PDCP PDU and the second PDCP PDU belong.

Correspondingly, the SN receives the second indication information from the MN.

For example, the MN indicates to the SN that the verification succeeds or fails, and sends to the SN, the identification information of the first PDCP PDU, for example, the identification information of the first PDCP PDU, and/or the MAC SNs of the first PDCP PDU and the second PDCP PDU that belong to the MAC PDU.

S809: The SN receives the second indication information, and if the second indication information indicates that the verification fails, the SN discards the cached second PDCP PDU based on the second indication information; or if the second indication information indicates that the verification succeeds, the SN processes the second PDCP PDU to obtain a second PDCP SDU and then sends the second PDCP SDU to the UPF.

In this embodiment, the MN is responsible for integrity verification on the part of the data packets in the MAC PDU. This implements partial integrity protection and reduces processing overheads of integrity protection.

This application further provides another data packet integrity protection solution. A first network device configures a terminal to perform integrity protection on a part of data packets in a MAC PDU. After a second network device receives a first data packet and a second data packet from the terminal, the second network device performs integrity verification on the first data packet. When the integrity verification fails, the second network device discards the foregoing two data packets. This reduces complexity of integrity protection.

FIG. 10 is a schematic flowchart of still another data packet integrity protection method according to an embodiment of this application. The method may include the following steps.

S1001: A first network device sends an integrity verification request to a second network device, where the request is used to request the second network device to perform integrity verification on a part of data packets in a MAC PDU.

S1002: After receiving the request, the second network device sends an integrity verification response to the first network device, where the response is used to determine that the second network device performs the integrity verification.

Correspondingly, the first network device receives the response.

For example, the foregoing steps S1001 and S1002 are optional steps, and are represented by dashed lines in the figure. The first network device and the second network device may be set before delivery, or may be specified in a protocol that the second network device performs the integrity verification.

S1003: The first network device sends configuration information to a terminal.

For a specific implementation of this step, refer to step S601, S701, or S803 in the foregoing embodiments. Details are not described herein again.

S1004: The terminal sends the MAC PDU to the second network device.

Correspondingly, the second network device receives the MAC PDU from the terminal.

For example, the terminal sends the MAC PDU to the second network device. The MAC PDU includes a first data packet and a second data packet. A network device in which the first data packet is terminated is the second network device, and a PDCP entity of the first data packet is in the second network device. Therefore, the first data packet does not need to be sent to the first network device, the first data packet is integrity protected, and the first data packet includes a MAC-I. A network device in which the second data packet is terminated is the first network device, and a PDCP entity of the second data packet is in the first network device. Therefore, the second data packet needs to be sent to the first network device, and the second data packet is not integrity protected. That is, the second data packet does not include a MAC-I.

The first data packet and the second data packet may be from different RBs, or may be from a same RB.

S1005: The second network device parses the MAC PDU to obtain the first data packet and the second data packet, and performs the integrity verification on the first data packet.

The second network device may further cache the second data packet until the second network device completes the integrity verification.

If the integrity verification succeeds, the following steps S1006a and S1007 are performed.

S1006a: The second network device processes the second data packet to obtain a third data packet, and sends the third data packet to the first network device.

Correspondingly, the first network device receives the third data packet, processes the third data packet to obtain a fourth data packet, and sends the fourth data packet to a UPF.

For example, the second network device encapsulates the second data packet to obtain the third data packet.

S1007: The second network device processes the first data packet to obtain a fifth data packet, and sends the fifth data packet to the UPF.

If the integrity verification fails, the following step S 1006b is performed.

S1006b: The second network device discards the first data packet and the second data packet.

According to the data packet integrity protection method provided in this embodiment of this application, the first network device configures the terminal to perform the integrity protection on the part of the data packets in the MAC PDU. After the second network device receives the first data packet and the second data packet from the terminal, the second network device performs the integrity verification on the first data packet. When the integrity verification fails, the second network device discards the foregoing two data packets. This reduces complexity of integrity protection.

The following further describes in detail the embodiment shown in FIG. 10 by using a DC architecture as an example. In the DC architecture, implementation of partial integrity protection is mainly applied to DAPS, a split bearer, and a replicated bearer. In this embodiment, the first network device is an MN, and the second network device is an SN. In other words, the MN is responsible for an integrity verification function.

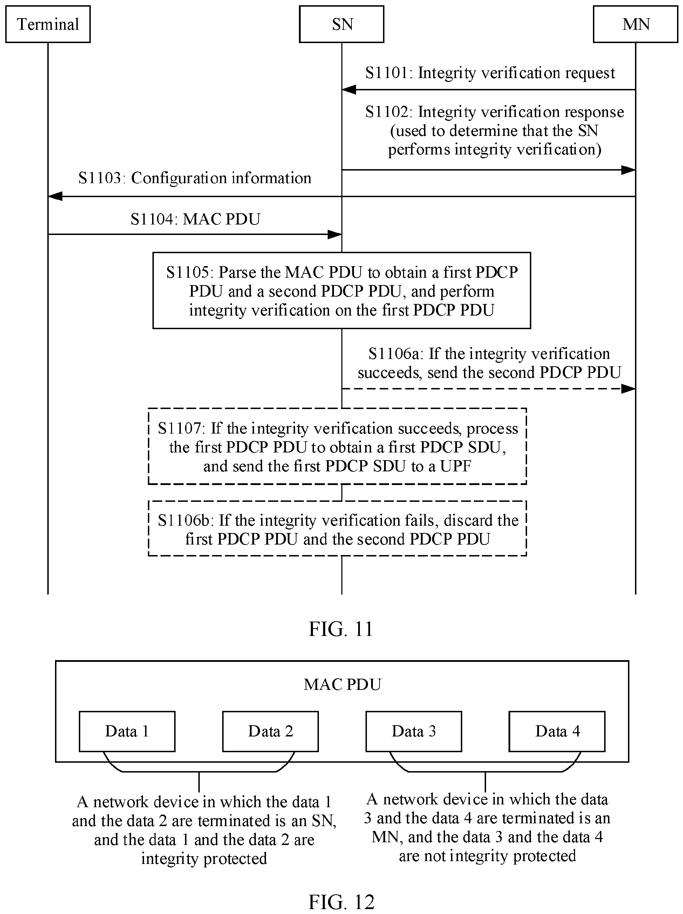

FIG. 11 is a schematic flowchart of still another data packet integrity protection method according to an embodiment of this application. The method may include the following steps.

S1101: An MN sends an integrity verification request to an SN, where the request is used to request the SN to perform integrity verification on a part of data packets in a MAC PDU.

S1102: After receiving the request, the SN sends an integrity verification response to the MN, where the response is used to determine that the SN performs the integrity verification.

Correspondingly, the MN receives the response.

S1103: The MN sends configuration information to a terminal.

For a specific implementation of this step, refer to step S601, S701, or S803 in the foregoing embodiments. Details are not described herein again.

S1104: The terminal sends the MAC PDU to the SN.

Correspondingly, the SN receives the MAC PDU from the terminal.

For example, the terminal sends the MAC PDU to the SN. The MAC PDU includes a first MAC SDU and a second MAC SDU. The first MAC SDU includes a first PDCP PDU, a network device in which the first PDCP PDU is terminated is the SN, and a PDCP entity of the first PDCP PDU is in the SN. Therefore, the first PDCP PDU does not need to be sent to the MN, the first PDCP PDU is integrity protected, and the first PDCP PDU includes a MAC-I. The second MAC SDU includes a second PDCP PDU, a network device in which the second PDCP PDU is terminated is the MN, and a PDCP entity of the second PDCP PDU is in the MN. Therefore, the second PDCP PDU needs to be sent to the MN, and the second PDCP PDU is not integrity protected. That is, the second PDCP PDU does not include a MAC-I.

The MAC PDU shown in FIG. 12 includes mixed data. Data 1 and data 2 correspond to the first PDCP PDU, a network device in which the data 1 and the data 2 are terminated is the SN, and the data 1 and the data 2 are integrity protected. Data 3 and data 4 correspond to the second PDCP PDU, a network device in which the data 3 and the data 4 are terminated is the MN, and the data 3 and the data 4 are not integrity protected.

The first PDCP PDU and the second PDCP PDU may be from different RBs, or may be from a same RB.

S1105: The SN parses the MAC PDU to obtain the first PDCP PDU and the second PDCP PDU, and performs the integrity verification on the first PDCP PDU.

The SN may further cache the second PDCP PDU until the SN completes the integrity verification.

If the integrity verification succeeds, the following steps S1106a and S1107 are performed.

S1106a: The SN sends the second PDCP PDU to the MN.

Correspondingly, the MN receives the second PDCP PDU, processes the second PDCP PDU to obtain a second PDCP SDU, and sends the second PDCP SDU to a UPF.

S1107: The SN processes the first PDCP PDU to obtain a first PDCP SDU, and sends the first PDCP SDU to the UPF.

If the integrity verification fails, the following step S 1106b is performed.

S1106b: The SN discards the first PDCP PDU and the second PDCP PDU.

In this embodiment, the SN is responsible for the integrity verification through negotiation. If the verification succeeds, the data packet terminated in a network device that is the MN is delivered to the MN. This implements partial integrity protection and reduces processing overheads of integrity protection.

This application further provides another data packet integrity protection solution. A first network device configures a terminal to perform integrity protection on a part of data packets in a MAC PDU. After a second network device receives a first data packet, a second data packet, a third data packet, and/or a fourth data packet from the terminal, the first network device performs integrity verification on the first data packet terminated in the first network device. When the integrity verification fails, the first network device discards the first data packet and the third data packet. The second network device performs integrity verification on the second data packet terminated in the second network device. When the integrity verification fails, the second network device discards the second data packet and the fourth data packet. This reduces complexity of integrity protection.

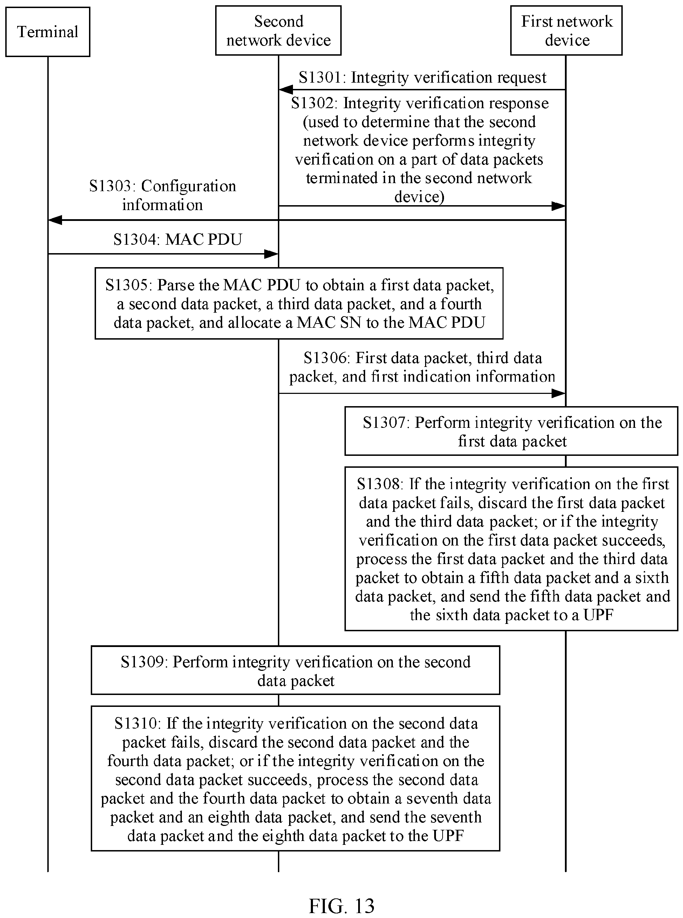

FIG. 13 is a schematic flowchart of still another data packet integrity protection method according to an embodiment of this application. The method may include the following steps.

S1301: A first network device sends an integrity verification request to a second network device, where the request is used to request the second network device to perform integrity verification on a data packet terminated in the second network device.

The data packet terminated in the second network device, namely, the data packet that is sent to the second network device, does not need to be sent to the first network device.

S1302: After receiving the request, the second network device sends an integrity verification response to the first network device, where the response is used to determine that the second network device performs the integrity verification on the data packet terminated in the second network device.

Correspondingly, the first network device receives the response.

S1303: The first network device sends configuration information to a terminal.

The configuration information is used to configure the terminal to perform integrity protection both on a part of data packets terminated in the first network device and on a part of data packets terminated in the second network device in a MAC PDU.

S1304: The terminal sends the MAC PDU to the second network device.

Correspondingly, the second network device receives the MAC PDU from the terminal.

For example, the terminal sends the MAC PDU to the second network device. The MAC PDU includes a first data packet, a second data packet, a third data packet, and/or a fourth data packet. A network device in which the first data packet is terminated is the first network device, and a PDCP entity of the first data packet is in the first network device. Therefore, the first data packet needs to be sent to the first network device, and the first data packet is integrity protected. That is, the second data packet includes a MAC-I. A network device in which the second data packet is terminated is the second network device, and a PDCP entity of the second data packet is in the second network device. Therefore, the second data packet does not need to be sent to the first network device, the second data packet is integrity protected, and the second data packet includes a MAC-I. A network device in which the third data packet is terminated is the first network device, and a PDCP entity of the third data packet is in the first network device. Therefore, the third data packet needs to be sent to the first network device, and the third data packet is not integrity protected. That is, the third data packet does not include a MAC-I. A network device in which the fourth data packet is terminated is the second network device, and a PDCP entity of the fourth data packet is in the second network device. Therefore, the fourth data packet does not need to be sent to the first network device, the fourth data packet is not integrity protected, and the fourth data packet does not include a MAC-I.

The first data packet, the second data packet, the third data packet, and the fourth data packet may be from different RBs, or may be from a same RB.

S1305: The second network device parses the MAC PDU to obtain the first data packet, the second data packet, the third data packet, and the fourth data packet, and allocates a MAC second network device to the MAC PDU.

Different MAC PDUs correspond to different MAC second network devices. The second network device allocates MAC second network devices to different MAC PDUs.

S1306: The second network device sends the first data packet, the third data packet, and first indication information to the first network device.

Correspondingly, the first network device receives the first data packet, the third data packet, and the first indication information.

The first indication information indicates that the first data packet and the third data packet belong to a same MAC PDU.

The first indication information is identification information of the MAC PDU. For example, the first indication information may be the MAC second network device. When sending the first data packet and the third data packet to the first network device, the second network device sends MAC second network devices of the first data packet and the third data packet at the same time. If MAC second network device numbers of the two data packets are the same, the first data packet and the third data packet are from the same MAC PDU.

S1307: The first network device performs integrity verification on the first data packet.

S1308: If the integrity verification performed by the first network device on the first data packet fails, the first network device discards the first data packet and the third data packet.

For example, if the integrity verification performed by the first network device on the first data packet succeeds, the first network device processes the first data packet and the third data packet to obtain a fifth data packet and a sixth data packet, and sends the fifth data packet and the sixth data packet to a UPF.

S1309: The second network device performs integrity verification on the second data packet.

S1310: If the integrity verification performed by the second network device on the second data packet fails, the second network device discards the second data packet and the fourth data packet.

For example, if the integrity verification performed by the second network device on the second data packet succeeds, the second network device processes the second data packet and the fourth data packet to obtain a seventh data packet and an eighth data packet, and sends the seventh data packet and the eighth data packet to the UPF.

According to the data packet integrity protection method provided in this embodiment of this application, the first network device configures the terminal to perform the integrity protection on the part of the data packets in the MAC PDU. After the second network device receives the first data packet, the second data packet, the third data packet, and/or the fourth data packet from the terminal, the first network device performs the integrity verification on the first data packet terminated in the first network device. When the integrity verification fails, the first network device discards the first data packet and the third data packet. The second network device performs the integrity verification on the second data packet terminated in the second network device. When the integrity verification fails, the second network device discards the second data packet and the fourth data packet. This reduces complexity of integrity protection.

The following further describes in detail the embodiment shown in FIG. 13 by using a DC architecture as an example. In the DC architecture, implementation of partial integrity protection is mainly applied to DAPS, a split bearer, and a replicated bearer. In this embodiment, the first network device is an MN, and the second network device is an SN. To be specific, the MN is responsible for integrity verification on the integrity-protected data packet terminated in a network device that is the MN, and the SN is responsible for integrity verification on the integrity-protected data packet terminated in a network device that is the SN.

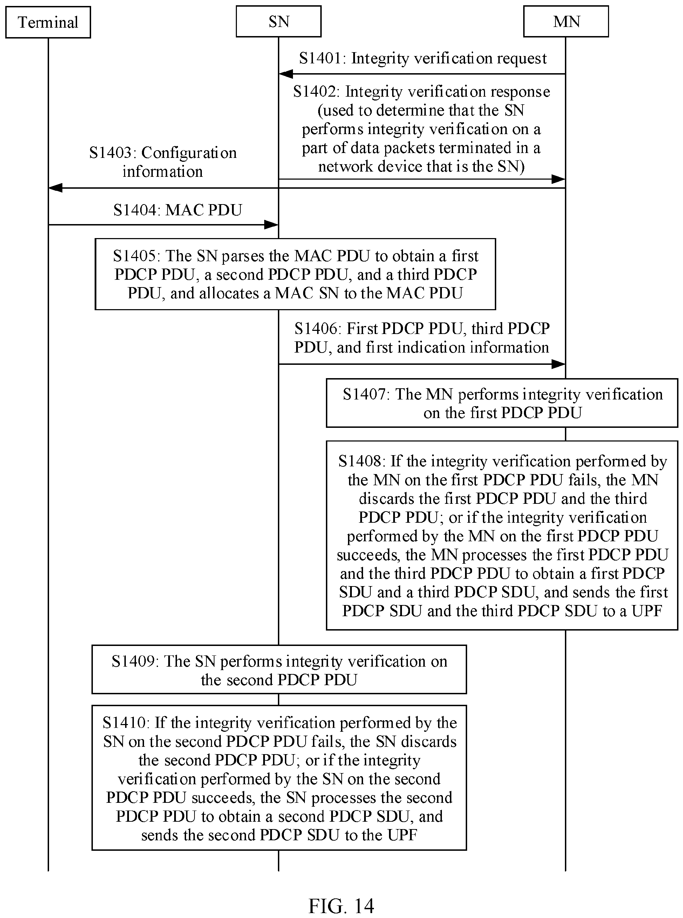

FIG. 14 is a schematic flowchart of still another data packet integrity protection method according to an embodiment of this application. The method may include the following steps.

S1401: An MN sends an integrity verification request to an SN, where the request is used to request the SN to perform integrity verification on a part of data packets, in a MAC PDU, terminated in a network device that is the SN (SN terminated).

The part of the data packets terminated in a network device that is the SN, namely, the part that is of the data packets and that is sent to the SN, does not need to be sent to the MN.

S1402: After receiving the request, the SN sends an integrity verification response to the MN, where the response is used to determine that the SN performs the integrity verification on the part of the data packets terminated in a network device that is the SN.

Correspondingly, the MN receives the response.

S1403: The MN sends configuration information to a terminal.

The configuration information is used to configure the terminal to perform integrity protection both on a part of data packets terminated in a network device that is the MN and on a part of data packets terminated in a network device that is the SN in the MAC PDU.

S1404: The terminal sends the MAC PDU to the SN.

Correspondingly, the SN receives the MAC PDU from the terminal.

For example, the terminal sends the MAC PDU to the SN. The MAC PDU includes a first MAC SDU, a second MAC SDU, and a third MAC SDU. The first MAC SDU includes a first PDCP PDU, a network device in which the first PDCP PDU is terminated is the MN (MN terminated), and a PDCP entity of the first PDCP PDU is in the MN. Therefore, the first PDCP PDU needs to be sent to the MN, and the first PDCP PDU is integrity protected. That is, the second PDCP PDU includes a MAC-I. The second MAC SDU includes a second PDCP PDU, a network device in which the second PDCP PDU is terminated is the SN, and a PDCP entity of the second PDCP PDU is in the SN. Therefore, the second PDCP PDU does not need to be sent to the MN, the second PDCP PDU is integrity protected, and the second PDCP PDU includes a MAC-I. The third MAC SDU includes a third PDCP PDU, a network device in which the third PDCP PDU is terminated is the MN, and a PDCP entity of the third PDCP PDU is in the MN. Therefore, the third PDCP PDU needs to be sent to the MN, and the third PDCP PDU is not integrity protected. That is, the third PDCP PDU does not include a MAC-I.

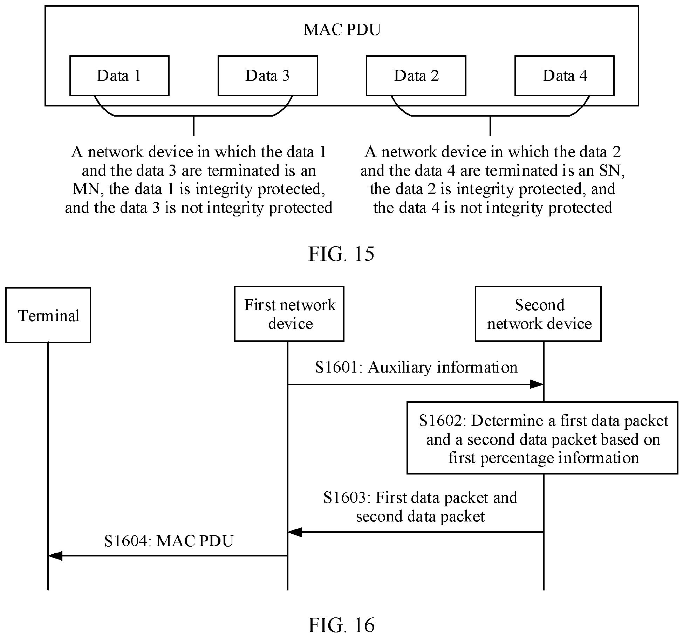

The MAC PDU shown in FIG. 15 includes mixed data. A network device in which data 1 and data 2 are terminated is the MN, the data 1 is integrity protected, and the data 2 is not integrity protected. A network device in which data 3 and data 4 are terminated is the MN, the data 2 is integrity protected, and the data 4 is not integrity protected. The data 1 corresponds to the first PDCP PDU, the data 3 corresponds to the second PDCP PDU, and the data 2 and the data 4 correspond to the third PDCP PDU.

The first PDCP PDU, the second PDCP PDU, and the third PDCP PDU may be from different RBs, or may be from a same RB.

S1405: The SN parses the MAC PDU to obtain the first PDCP PDU, the second PDCP PDU, and the third PDCP PDU, and allocates a MAC SN to the MAC PDU.

Different MAC PDUs correspond to different MAC SNs. The SN allocates MAC SNs to different MAC PDUs.

S1406: The SN sends the first PDCP PDU, the third PDCP PDU, and first indication information to the MN.

Correspondingly, the MN receives the first PDCP PDU, the third PDCP PDU, and the first indication information.

The first indication information indicates that the first PDCP PDU and the third PDCP PDU belong to a same MAC PDU.

The first indication information is identification information of the MAC PDU. For example, the first indication information may be the MAC SN. When sending the first PDCP PDU and the third PDCP PDU to the MN, the SN sends MAC SNs of the first PDCP PDU and the third PDCP PDU at the same time. If MAC SNs of the two PDCP PDUs are the same, the first PDCP PDU and the third PDCP PDU are from the same MAC PDU.

S1407: The MN performs integrity verification on the first PDCP PDU.

S1408: If the integrity verification performed by the MN on the first PDCP PDU fails, the MN discards the first PDCP PDU and the third PDCP PDU; or if the integrity verification performed by the MN on the first PDCP PDU succeeds, the MN processes the first PDCP PDU and the third PDCP PDU to obtain a first PDCP SDU and a third PDCP SDU, and sends the first PDCP SDU and the third PDCP SDU to a UPF.

S1409: The SN performs integrity verification on the second PDCP PDU.

S1410: If the integrity verification performed by the SN on the second PDCP PDU fails, the SN discards the second PDCP PDU; or if the integrity verification performed by the SN on the second PDCP PDU succeeds, the SN processes the second PDCP PDU to obtain a second PDCP SDU, and sends the second PDCP SDU to the UPF.

In this embodiment, the MN and the SN each are responsible for the integrity verification on the parts of the data packets terminated in network devices that are the MN and the SN. This implements partial integrity protection of data of the MN and the SN, and reduces processing load of integrity protection.

The foregoing embodiment describes integrity protection of uplink data. The following embodiment describes integrity protection of downlink data.

FIG. 16 is a schematic flowchart of still another data packet integrity protection method according to an embodiment of this application. The method may include the following steps.

S1601: A first network device sends auxiliary information to a second network device.

Correspondingly, the second network device receives the auxiliary information.

The auxiliary information includes expected first percentage information that is of data packets to be integrity protected and that is in a MAC PDU.

In this embodiment, partial integrity protection is implemented. Specifically, the second network device determines a quantity of integrity-protected data packets and a quantity of non-integrity-protected data packets. The first network device may send the auxiliary information to the second network device. The auxiliary information carries the expected first percentage information that is of the data packets to be integrity protected and that is in the MAC PDU.

For example, if the first percentage information is 20%, it indicates that it is expected that, in a MAC PDU that is subsequently generated and that is for integrity protection, ten PDCP PDUs include two integrity-protected PDCP PDUs.

S1602: The second network device determines a first data packet and a second data packet based on the first percentage information, where the first data packet is integrity protected, and the second data packet is not integrity protected.

After receiving the auxiliary information, the second network device determines, based on the first percentage information in the auxiliary information, the quantity of integrity-protected data packets and the quantity of non-integrity-protected data packets. For example, the second network device determines the first data packet and the second data packet based on the first percentage information. Certainly, the quantity of integrity-protected data packets and the quantity of non-integrity-protected data packets are not limited in this application.

S1603: The second network device sends the first data packet and the second data packet to the first network device.

Correspondingly, the first network device receives the first data packet and the second data packet.

S1604: The first network device sends the MAC PDU to a terminal, where the MAC PDU includes the first data packet and the second data packet.

Correspondingly, the terminal receives the MAC PDU, and parses the MAC PDU to obtain the first data packet and the second data packet.

After receiving the first data packet and the second data packet that are sent by the second network device, the first network device generates the MAC PDU. The MAC PDU includes the first data packet and the second data packet. The first network device sends the MAC PDU to the terminal.

According to the data packet integrity protection method provided in this embodiment of this application, the first network device sends, to the second network device, the expected first percentage information that is of the data packets to be integrity protected and that is in the MAC PDU, so that the second network device determines, based on the first percentage information, the quantity of partial data packets to be integrity protected. This may implement partial integrity protection more effectively.

The following further describes in detail the embodiment shown in FIG. 16 by using a CU/DU separation architecture as an example. In this example, the first network device is a gNB DU, and the second network device is a gNB CU. An interface between the gNB CU and gNB DU is an F1 interface. The following procedure mainly relates to information exchange through the F1 interface.

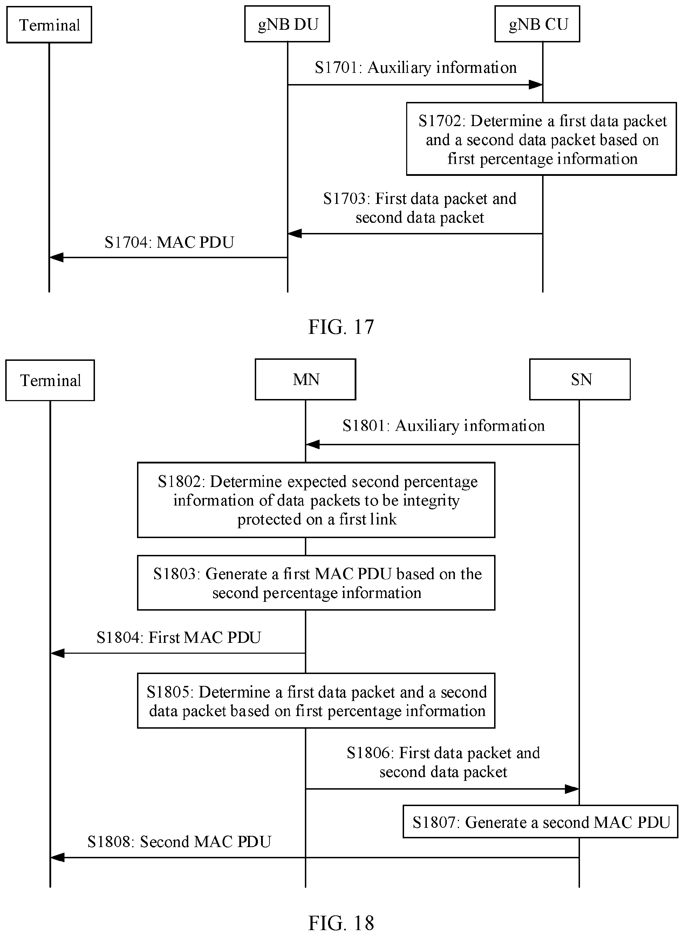

FIG. 17 is a schematic flowchart of still another data packet integrity protection method according to an embodiment of this application. The method may include the following steps.

S1701: A gNB DU sends auxiliary information to a gNB CU.

Correspondingly, the gNB CU receives the auxiliary information.

The auxiliary information includes expected first percentage information that is of data packets to be integrity protected and that is in a MAC PDU.

For example, alternatively, the gNB DU may send scheduling information to the gNB CU. The scheduling information includes the expected first percentage information that is of the data packets to be integrity protected and that is in the MAC PDU, so that the gNB CU generates an integrity-protected data packet based on the scheduling information.

S 1702: The gNB CU determines a first data packet and a second data packet based on the first percentage information, where the first data packet is integrity protected, and the second data packet is not integrity protected.

For example, the gNB CU determines a quantity of integrity-protected data packets and a quantity of non-integrity-protected data packets based on the first percentage information. For example, the gNB CU determines the first data packet and the second data packet based on the first percentage information. Certainly, the quantity of integrity-protected data packets and the quantity of non-integrity-protected data packets are not limited in this application.

S 1703: The gNB CU sends the first data packet and the second data packet to the gNB DU.

Correspondingly, the gNB DU receives the first data packet and the second data packet.

S 1704: The gNB DU sends the MAC PDU to a terminal.

After receiving the first data packet and the second data packet that are sent by the gNB CU, the gNB DU generates the MAC PDU. The MAC PDU includes the first data packet and the second data packet. The gNB DU sends the MAC PDU to the terminal.

Correspondingly, the terminal receives the MAC PDU, and parses the MAC PDU to obtain the first data packet and the second data packet. The terminal may perform integrity verification on the first data packet that is integrity protected, and process the first data packet and the second data packet based on a verification result.

In this embodiment, the auxiliary information is exchanged through the F1 interface, so that partial integrity protection may be implemented more effectively.

The following further describes in detail the embodiment shown in FIG. 16 by using a DC architecture as an example. In the DC architecture, implementation of partial integrity protection is mainly applied to DAPS, a split bearer, and a replicated bearer. An interface between an MN and an SN is an Xn interface. The following procedure mainly relates to information exchange through the Xn interface.

FIG. 18 is a schematic flowchart of still another data packet integrity protection method according to an embodiment of this application. The method may include the following steps.

S1801: An SN sends auxiliary information to an MN.

Correspondingly, the MN receives the auxiliary information.

The auxiliary information includes expected first percentage information that is of data packets to be integrity protected and that is in a MAC PDU.

Different bearers or links provide respective expected percentage information. The SN communicates with a terminal through a second link (second link). Therefore, the auxiliary information is included in the second link.

For example, if the first percentage information is 20%, it indicates that it is expected that, in a MAC PDU that is subsequently generated by the MN and that is for integrity protection, ten PDCP PDUs include two integrity-protected PDCP PDUs.

S1802: The MN determines expected second percentage information of data packets to be integrity protected on a first link (first link).

The MN communicates with the terminal through the first link. Therefore, the MN determines the expected second percentage information of the data packets to be integrity protected on the first link.

S1803: The MN generates a first MAC PDU based on the second percentage information, where the first MAC PDU includes a third data packet and a fourth data packet, the third data packet is integrity protected, and the fourth data packet is not integrity protected.

S1804: The MN sends the first MAC PDU to the terminal.

Correspondingly, the terminal receives the first MAC PDU.

S1805: The MN determines a first data packet and a second data packet based on the first percentage information, where the first data packet is integrity protected, and the second data packet is not integrity protected.

The MN determines, based on the first percentage information, a quantity of integrity-protected data packets and a quantity of non-integrity-protected data packets on the second link. For example, the MN determines the first data packet and the second data packet based on the first percentage information. Certainly, the quantity of integrity-protected data packets and the quantity of non-integrity-protected data packets are not limited in this application.

S1806: The MN sends the first data packet and the second data packet to the SN.

Correspondingly, the SN receives the first data packet and the second data packet.

S1807: The SN generates a second MAC PDU, where the second MAC PDU includes the first data packet and the second data packet.

S1808: The SN sends the second MAC PDU to the terminal.

Correspondingly, the terminal receives the MAC PDU, and parses the MAC PDU to obtain the first data packet and the second data packet.

In this embodiment, the auxiliary information is exchanged through the Xn interface, so that partial integrity protection may be implemented more effectively.

The foregoing describes in detail the embodiments of the data packet integrity protection method. The following describes a data packet integrity protection apparatus based on a same concept as the method. The data packet integrity protection apparatus may be the terminal, the first network device, or the second network device.

For example, in embodiments of this application, the terminal, the first network device, or the second network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for executing the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal or a functional module that is in the terminal, the first network device, or the second network device and that can invoke and execute the program.

In other words, a related function of the terminal, the first network device, or the second network device in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, or may be a software function running on dedicated hardware, a combination of hardware and software, or a virtualized function instantiated on a platform (for example, a cloud platform).

It may be understood that, to implement functions in the foregoing embodiments, the terminal, the first network device, or the second network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

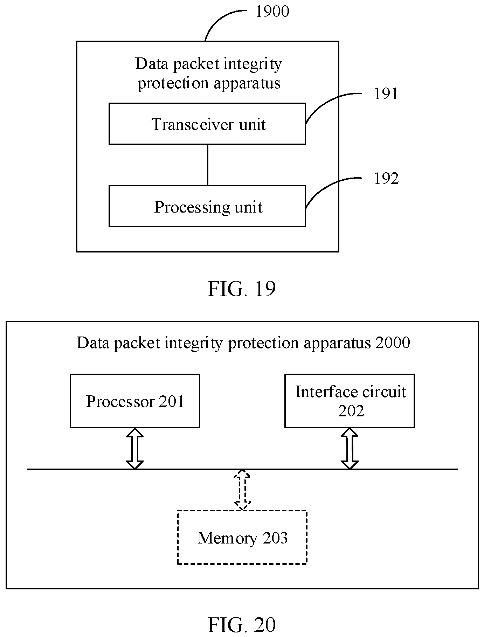

FIG. 19 and FIG. 20 each are a diagram of a structure of a possible data packet integrity protection apparatus according to an embodiment of this application. The data packet integrity protection apparatus may also be a communication apparatus. These data packet integrity protection apparatuses may be configured to implement the function of the terminal, the first network device, or the second network device in the foregoing method embodiments. Therefore, beneficial effects in the foregoing method embodiments can also be implemented. In embodiments of this application, the data packet integrity protection apparatus may be the terminal, the first network device, or the second network device, or may be a module (such as a chip) used in the terminal, the first network device, or the second network device.

FIG. 19 is a diagram of a structure of a data packet integrity protection apparatus according to an embodiment of this application. The apparatus 1900 includes a transceiver unit 191 and a processing unit 192.

In an embodiment, the apparatus may be the first network device in the embodiment shown in FIG. 6. The transceiver unit 191 is configured to send configuration information to a terminal. The configuration information is used to configure the terminal to perform integrity protection on a part of data packets in a MAC PDU. The transceiver unit 191 is further configured to receive a first data packet, a second data packet, and first indication information from a second network device. The first data packet is integrity protected, the second data packet is not integrity protected, and the first indication information indicates that the first data packet and the second data packet belong to a same MAC PDU. The processing unit 192 is configured to perform integrity verification on the first data packet based on the first indication information. In addition, the processing unit 192 is further configured to: when the integrity verification on the first data packet fails, discard the first data packet and the second data packet.

Optionally, the transceiver unit 191 is further configured to send second indication information to the second network device. The second indication information includes at least one of the following information: identification information of the first data packet, and identification information of the MAC PDU to which the first data packet and the second data packet belong.

Optionally, the first indication information is the identification information of the MAC PDU.

Optionally, the transceiver unit 191 is further configured to send an integrity verification request to the second network device. The integrity verification request is used to request the second network device to perform integrity verification on a part of data packets in a MAC PDU. In addition, the transceiver unit 191 is further configured to receive an integrity verification response from the second network device. The integrity verification response is used to determine that the second network device does not perform the integrity verification.

In another embodiment, the apparatus may be the second network device in the embodiment shown in FIG. 6. The transceiver unit 191 is configured to receive a first data packet and a second data packet from a terminal. The first data packet is integrity protected, and the second data packet is not integrity protected. The transceiver unit 191 is further configured to send the first data packet, the second data packet, and first indication information to a first network device. The first indication information indicates that the first data packet and the second data packet belong to a same MAC PDU. In addition, the transceiver unit 191 is further configured to: when integrity verification performed by the first network device on the first data packet fails, receive second indication information from the first network device. The second indication information includes at least one of the following information: identification information of the first data packet, and identification information of the MAC PDU to which the first data packet and the second data packet belong.

Optionally, a network device in which the first data packet is terminated is the second network device, and a network device in which the second data packet is terminated is the first network device. The processing unit 192 is configured to discard the first data packet based on the second indication information.

Optionally, the first indication information is the identification information of the MAC PDU.

Optionally, the transceiver unit 191 is further configured to receive an integrity verification request from the first network device. The integrity verification request is used to request the second network device to perform integrity verification on a part of data packets in a MAC PDU. In addition, the transceiver unit 191 is further configured to send an integrity verification response to the first network device. The integrity verification response is used to indicate to determine that the second network device does not perform the integrity verification.

Optionally, the processing unit 192 is further configured to back off a radio link control receive window to receive the retransmitted first data packet.

In still another embodiment, the apparatus may be the second network device in the embodiment shown in FIG. 10. The transceiver unit 191 is configured to receive a first data packet and a second data packet from a terminal. The first data packet is integrity protected, the second data packet is not integrity protected, and the first data packet and the second data packet belong to a same MAC PDU. The processing unit 192 is configured to perform integrity verification on the first data packet. In addition, the processing unit 192 is further configured to: when the integrity verification on the first data packet fails, discard the first data packet and the second data packet.

Optionally, a network device in which the first data packet is terminated is the second network device, and a network device in which the second data packet is terminated is a first network device. The processing unit 192 is further configured to: when the integrity verification on the first data packet succeeds, process the second data packet to obtain a third data packet. In addition, the transceiver unit 191 is further configured to send the third data packet to the first network device.

Optionally, the transceiver unit 191 is further configured to receive an integrity verification request from the first network device. The integrity verification request is used to request the second network device to perform integrity verification on a part of data packets in a MAC PDU. In addition, the transceiver unit 191 is further configured to send an integrity verification response to the first network device. The integrity verification response is used to indicate to determine that the second network device performs the integrity verification.

In still another embodiment, the apparatus may be the terminal in the embodiment shown in FIG. 13. The transceiver unit 191 is configured to receive configuration information from a first network device. The configuration information is used to configure the terminal to perform integrity protection both on a part of data packets terminated in the first network device and on a part of data packets terminated in a second network device in a MAC PDU. In addition, the transceiver unit 191 is further configured to send a first data packet, a second data packet, a third data packet, and/or a fourth data packet to the second network device. The first data packet and the second data packet are integrity protected, the third data packet and the fourth data packet are not integrity protected, a network device in which the first data packet and the third data packet are terminated is the first network device, and a network device in which the second data packet and the fourth data packet are terminated is the second network device.

In still another embodiment, the apparatus may be the first network device in the embodiment shown in FIG. 13. The transceiver unit 191 is configured to send configuration information to a terminal. The configuration information is used to configure the terminal to perform integrity protection both on a part of data packets terminated in the first network device and on a part of data packets terminated in a second network device in a MAC PDU. The transceiver unit 191 is further configured to receive a first data packet, a third data packet, and first indication information from the second network device. The first data packet is integrity protected, the third data packet is not integrity protected, a network device in which the first data packet and the third data packet are terminated is the first network device, and the first indication information indicates that the first data packet and the third data packet belong to a same MAC PDU. The processing unit 192 is configured to perform integrity verification on the first data packet based on the first indication information. In addition, the processing unit 192 is further configured to: when the integrity verification on the first data packet fails, discard the first data packet and the third data packet.

Optionally, the first indication information is identification information of the MAC PDU.

Optionally, the transceiver unit 191 is further configured to send an integrity verification request to the second network device. The integrity verification request is used to request the second network device to perform integrity verification on a data packet terminated in the second network device. In addition, the transceiver unit 191 is further configured to receive an integrity verification response from the second network device. The integrity verification response is used to determine that the second network device performs the integrity verification on the data packet terminated in the second network device.

In still another embodiment, the apparatus may be the second network device in the embodiment shown in FIG. 13. The transceiver unit 191 is configured to receive a first data packet, a second data packet, a third data packet, and/or a fourth data packet from a terminal. The first data packet and the second data packet are integrity protected, the third data packet and the fourth data packet are not integrity protected, a network device in which the first data packet and the third data packet are terminated is a first network device, and a network device in which the second data packet and the fourth data packet are terminated is the second network device. The transceiver unit 191 is further configured to send the first data packet, the third data packet, and first indication information to the first network device. The first indication information indicates that the first data packet and the third data packet belong to a same MAC PDU. The processing unit 192 is configured to perform integrity verification on the second data packet. In addition, the processing unit 192 is further configured to: when the integrity verification on the second data packet fails, discard the second data packet and the fourth data packet.

Optionally, the first indication information is identification information of the MAC PDU.

Optionally, the transceiver unit 191 is further configured to receive an integrity verification request from the first network device. The integrity verification request is used to request the second network device to perform integrity verification on a data packet terminated in the second network device. In addition, the transceiver unit 191 is further configured to send an integrity verification response to the first network device. The integrity verification response is used to determine that the second network device performs the integrity verification on the data packet terminated in the second network device.

In still another embodiment, the apparatus may be the first network device in the embodiment shown in FIG. 16. The transceiver unit 191 is configured to send auxiliary information to a second network device. The auxiliary information includes expected first percentage information that is of data packets to be integrity protected and that is in a MAC PDU. The transceiver unit 191 is further configured to receive a first data packet and a second data packet from the second network device. The first data packet is integrity protected, and the second data packet is not integrity protected. In addition, the transceiver unit 191 is further configured to send the MAC PDU to a terminal. The MAC PDU includes the first data packet and the second data packet.

In still another embodiment, the apparatus may be the second network device in the embodiment shown in FIG. 16. The transceiver unit 191 is configured to receive auxiliary information from a first network device. The auxiliary information includes expected first percentage information that is of data packets to be integrity protected and that is in a MAC PDU. The processing unit 192 is configured to determine a first data packet and a second data packet based on the first percentage information. The first data packet is integrity protected, and the second data packet is not integrity protected. In addition, the transceiver unit 191 is further configured to send the first data packet and the second data packet to the first network device.

Optionally, the processing unit 192 is further configured to determine expected second percentage information that is of data packets to be integrity protected and that is in a MAC PDU. In addition, the processing unit 192 is further configured to send a second MAC PDU to a terminal based on the second percentage information. The second MAC PDU includes at least one third data packet and at least one fourth data packet, the at least one third data packet is integrity protected, and the at least one fourth data packet is not integrity protected.

For specific implementations of the transceiver unit 191 and the processing unit 192, refer to the corresponding method embodiments. Details are not described herein again.

As shown in FIG. 20, a data packet integrity protection apparatus 2000 includes a processor 201 and an interface circuit 202. The processor 201 and the interface circuit 202 are coupled to each other. It may be understood that the interface circuit 202 may be a transceiver or an input/output interface. For example, the data packet integrity protection apparatus 2000 may further include a memory 203, configured to store instructions executed by the processor 201, store input data required by the processor 201 to run the instructions, or store data generated after the processor 201 runs the instructions.

When the data packet integrity protection apparatus 2000 is configured to implement the method shown in the foregoing method embodiments, the processor 201 is configured to implement a function of the processing unit 192, and the interface circuit 202 is configured to implement a function of the transceiver unit 191.

When the data packet integrity protection apparatus is a chip used in the terminal, the first network device, or the second network device, the chip implements a function of the terminal, the first network device, or the second network device in the foregoing method embodiments. The chip receives information from another module (for example, a radio frequency module or an antenna) in the terminal, the first network device, or the second network device. The information is sent by other user equipment to the terminal, the first network device, or the second network device. Alternatively, the chip sends information to another module (for example, a radio frequency module or an antenna) in the terminal, the first network device, or the second network device. The information is sent by the terminal, the first network device, or the second network device to other user equipment.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

The method steps in embodiments of this application may be implemented in a hardware manner, or may be implemented in a manner of executing software instructions by the processor. The software instructions may be composed of corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or a storage medium in any other form well-known in the art. For example, a storage medium is coupled to a processor, so that the processor can read information from the storage medium and write the information into the storage medium. Certainly, the storage medium may alternatively be a component of the processor. The processor and the storage medium may be located in an ASIC. In addition, the ASIC may be located in a base station or a terminal. Certainly, the processor and the storage medium may exist in the base station or the terminal as discrete components.

All or some of the foregoing embodiments may be implemented by software, hardware, firmware, or any combination thereof. When software is used for implementation, all or some of the embodiments may be implemented in a form of a computer program product. The computer program product includes one or more computer programs or instructions. When the computer programs or instructions are loaded and executed on a computer, all or some of the processes or the functions in embodiments of this application are performed. The computer may be a general-purpose computer, a dedicated computer, a computer network, a base station, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The terms "system" and "network" may be used interchangeably in embodiments of this application.

It may be understood that various numbers in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes. It should be further understood that ordinal numerals such as "first" and "second" mentioned in embodiments of this application are intended to distinguish between a plurality of objects, and are not intended to limit sizes, content, sequences, time sequences, priorities, importance, or the like of the plurality of objects.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes.

## Claims

1. A data packet integrity protection method, wherein the method comprises:
sending, by a first network device, configuration information to a terminal, wherein the configuration information is used to configure the terminal to perform integrity protection on a part of data packets in a media access control MAC protocol data unit PDU;
receiving, by the first network device, a first data packet, a second data packet, and first indication information from a second network device, wherein the first data packet is integrity protected, the second data packet is not integrity protected, and the first indication information indicates that the first data packet and the second data packet belong to a same MAC PDU;
performing, by the first network device, integrity verification on the first data packet based on the first indication information; and
when the integrity verification on the first data packet fails, discarding, by the first network device, the first data packet and the second data packet.

2. The method according to claim 1, wherein the method further comprises:
sending, by the first network device, second indication information to the second network device, wherein the second indication information comprises at least one of the following information: identification information of the first data packet, and identification information of the MAC PDU to which the first data packet and the second data packet belong.

3. The method according to claim 1 or 2, wherein the first indication information is the identification information of the MAC PDU.

4. The method according to any one of claims 1 to 3, wherein the method further comprises:
sending, by the first network device, an integrity verification request to the second network device, wherein the integrity verification request is used to request the second network device to perform integrity verification on a part of data packets in a MAC PDU; and
receiving, by the first network device, an integrity verification response from the second network device, wherein the integrity verification response is used to determine that the second network device does not perform the integrity verification.

5. A data packet integrity protection method, wherein the method comprises:
receiving, by a second network device, a first data packet and a second data packet from a terminal, wherein the first data packet is integrity protected, and the second data packet is not integrity protected;
sending, by the second network device, the first data packet, the second data packet, and first indication information to a first network device, wherein the first indication information indicates that the first data packet and the second data packet belong to a same media access control MAC protocol data unit PDU; and
when integrity verification performed by the first network device on the first data packet fails, receiving, by the second network device, second indication information from the first network device, wherein the second indication information comprises at least one of the following information: identification information of the first data packet, and identification information of the MAC PDU to which the first data packet and the second data packet belong.

6. The method according to claim 5, wherein a network device in which the first data packet is terminated is the second network device, a network device in which the second data packet is terminated is the first network device, and the method further comprises:
discarding, by the second network device, the first data packet based on the second indication information.

7. The method according to claim 5 or 6, wherein the first indication information is the identification information of the MAC PDU.

8. The method according to any one of claims 5 to 7, wherein the method further comprises:
receiving, by the second network device, an integrity verification request from the first network device, wherein the integrity verification request is used to request the second network device to perform integrity verification on a part of data packets in a MAC PDU; and
sending, by the second network device, an integrity verification response to the first network device, wherein the integrity verification response is used to indicate to determine that the second network device does not perform the integrity verification.

9. The method according to any one of claims 5 to 8, wherein the method further comprises:
backing off, by the second network device, a radio link control receive window to receive the retransmitted first data packet.

10. A data packet integrity protection apparatus, wherein the apparatus comprises:
a transceiver unit, configured to send configuration information to a terminal, wherein the configuration information is used to configure the terminal to perform integrity protection on a part of data packets in a media access control MAC protocol data unit PDU, wherein
the transceiver unit is further configured to receive a first data packet, a second data packet, and first indication information from a second network device, wherein the first data packet is integrity protected, the second data packet is not integrity protected, and the first indication information indicates that the first data packet and the second data packet belong to a same MAC PDU; and
a processing unit, configured to perform integrity verification on the first data packet based on the first indication information, wherein
the processing unit is further configured to: when the integrity verification on the first data packet fails, discard the first data packet and the second data packet.

11. The apparatus according to claim 10, wherein the transceiver unit is further configured to send second indication information to the second network device, wherein the second indication information comprises at least one of the following information: identification information of the first data packet, and identification information of the MAC PDU to which the first data packet and the second data packet belong.

12. The apparatus according to claim 10 or 11, wherein the first indication information is the identification information of the MAC PDU.

13. The apparatus according to any one of claims 10 to 12, wherein the transceiver unit is further configured to send an integrity verification request to the second network device, wherein the integrity verification request is used to request the second network device to perform integrity verification on a part of data packets in a MAC PDU; and
the transceiver unit is further configured to receive an integrity verification response from the second network device, wherein the integrity verification response is used to determine that the second network device does not perform the integrity verification.

14. A data packet integrity protection apparatus, wherein the apparatus comprises:
a transceiver unit, configured to receive a first data packet and a second data packet from a terminal, wherein the first data packet is integrity protected, and the second data packet is not integrity protected, wherein
the transceiver unit is further configured to send the first data packet, the second data packet, and first indication information to a first network device, wherein the first indication information indicates that the first data packet and the second data packet belong to a same media access control MAC protocol data unit PDU; and
the transceiver unit is further configured to: when integrity verification performed by the first network device on the first data packet fails, receive second indication information from the first network device, wherein the second indication information comprises at least one of the following information: identification information of the first data packet, and identification information of the MAC PDU to which the first data packet and the second data packet belong.

15. The apparatus according to claim 14, wherein a network device in which the first data packet is terminated is the second network device, a network device in which the second data packet is terminated is the first network device, and the apparatus further comprises:
a processing unit, configured to discard the first data packet based on the second indication information.

16. The apparatus according to claim 14 or 15, wherein the first indication information is the identification information of the MAC PDU.

17. The apparatus according to any one of claims 14 to 16, wherein the transceiver unit is further configured to receive an integrity verification request from the first network device, wherein the integrity verification request is used to request the second network device to perform integrity verification on a part of data packets in a MAC PDU; and
the transceiver unit is further configured to send an integrity verification response to the first network device, wherein the integrity verification response is used to indicate to determine that the second network device does not perform the integrity verification.

18. The apparatus according to any one of claims 14 to 17, wherein the processing unit is further configured to back off a radio link control receive window to receive the retransmitted first data packet.

19. A data packet integrity protection apparatus, comprising a processor, wherein the processor is coupled to a memory, and the processor is configured to read instructions in the memory, to implement the method according to any one of claims 1 to 4 or the method according to any one of claims 5 to 9.

20. A computer-readable storage medium, wherein the computer-readable storage medium stores a computer program, and when the program is executed by a processor, the method according to any one of claims 1 to 4 or the method according to any one of claims 5 to 9 is implemented.

21. A computer program product, wherein when the computer program product is executed on a computing device, the method according to any one of claims 1 to 4 or the method according to any one of claims 5 to 9 is performed.
